# EUROPÄISCHE PATENTSCHRIFT

(11) **EP 2 705 983 B1**
(45) Veröffentlichungstag und Bekanntmachung des Hinweises auf die Patenterteilung: **13.11.2019**
(21) Anmeldenummer: 13161573.4
(22) Anmeldetag: 28.03.2013
(51) Int. Cl.: B60P 7/08

(54) **Vorrichtung zur sicherung von ladegut**
Device for securing loads
Dispositif de sécurisation de marchandises

(30) Priorität: 06.09.2012 DE 102012215863; 15.10.2012 DE 102012218762
(43) Veröffentlichungstag der Anmeldung: 12.03.2014
(73) Patentinhaber: CIMC Silvergreen GmbH, 89312 Günzburg (DE); CIMC Vehicles Group Co., Ltd., Guangdong 518067 (CN)
(72) Erfinder: Hellenschmidt, Dieter, 89134 Baustein (DE); Ortlieb, Thomas, 70839 Gerlingen (DE); Bauknecht, Markus, 73466 Lauchheim (DE); Schaller, Jürgen, 70806 Kornwestheim (DE); Wang,Wentao, Shenhzhen, Guangdong 518118 (CN)
(74) Vertreter: Manitz Finsterwald Patent- und Rechtsanwaltspartnerschaft mbB

(56) Entgegenhaltungen:
- EP-A1- 0 947 380
- EP-A1- 0 949 112
- FR-A1- 2 762 815
- US-A- 5 236 153
- US-A1- 2009 080 995
- US-B1- 6 290 426
- US-B1- 6 299 120

## Beschreibung

Die Erfindung betrifft eine Vorrichtung zur Sicherung von Ladegut an einem Ladeboden, der mindestens eine Längsnut aufweist.

Zur Montage an einer Längsnut eines Ladebodens, z.B. eines Transportfahrzeugs, vorgesehene Ladungssicherungsvorrichtungen sind grundsätzlich bekannt. Diese bekannten Vorrichtungen weisen jedoch den Nachteil auf, dass sie zum Eintauchen in die Längsnut einen Nutausschnitt erfordern, der sich üblicherweise an einem Ende der Längsnut befindet, so dass die Ladungssicherungsvorrichtung nach dem Eintauchen in die Längsnut umständlich an die gewünschte Position verschoben werden muss.

Sicherrungsvorrichtungen gemäß dem Oberbegriff des Anspruchs 1 sind aus der US 5,236,153 und der EP 0 947 380 A1 bekannt.

Der Erfindung liegt die Aufgabe zugrunde, eine kostengünstige Vorrichtung zur Sicherung von Ladegut zu schaffen, die eine leichte und kompakte Bauform aufweist, einfach handhabbar ist und sich sicher positionieren lässt, ohne dass der Ladeboden dabei beschädigt wird.

Zur Lösung der Aufgabe ist eine Vorrichtung mit den Merkmalen des Anspruchs 1 vorgesehen.

Die erfindungsgemäße Vorrichtung ist zur Sicherung von Ladegut an einem Ladeboden, z.B. eines Containers oder Transportfahrzeugs, vorgesehen, welcher wenigstens eine Längsnut mit mindestens einer Hinterschneidung aufweist. Bei der Längsnut kann es sich beispielsweise um eine W-förmige Nut handeln, in welchem Fall das Adapterelement vorteilhafterweise zwei Eingriffsmittel umfasst. Die Längsnut muss aber nicht notwendigerweise einen W-förmigen Querschnitt aufweisen, sondern kann zum Beispiel auch einen umgedrehten T-förmigen Querschnitt oder einen anderen Querschnitt aufweisen, solange dieser mindestens eine Hinterschneidung definiert. Der Ladeboden kann beispielsweise durch ein Aluminium-Strangprofil gebildet sein, in das die Längsnut integriert ist.

Die Sicherungsvorrichtung umfasst einen Klemmmechanismus, der seinerseits ein Adapterelement mit zwei in die Längsnut des Ladebodens einführbaren Eingriffsmittel und ein Betätigungselement aufweist, durch welches die Eingriffsmittel kraft- und formschlüssig mit der Hinterschneidung der Längsnut in Eingriff bringbar sind, um den Klemmmechanismus und dadurch letztlich die gesamte Vorrichtung zuverlässig am Ladeboden zu verankern und somit das Ladegut sicher zu fixieren.

Umgekehrt lassen sich die Eingriffsmittel und die Hinterschneidung durch das Betätigungselement auf einfache Weise auch wieder außer Eingriff bringen, um den Klemmmechanismus zu lösen, z.B. um die Position der Sicherungsvorrichtung innerhalb der Längsnut zu variieren oder die Sicherungsvorrichtung ganz aus der Längsnut zu entfernen.

Es versteht sich, dass die Klemmwirkung und somit letztlich die Qualität der Verankerung der Sicherungsvorrichtung in der Längsnut erhöht werden können, wenn die Sicherungsvorrichtung mehr als einen Klemmmechanismus aufweist. Dabei sind mehrere Klemmmechanismen vorzugsweise in Richtung der Längsnut gesehen hintereinander angeordnet.

Erfindungsgemäß sind die Eingriffsmittel beweglich in oder an dem Adapterelement gelagert und durch eine Verdrehung, Verschwenkung und/oder Verschiebung aus einer Eintauchlage, in welcher es in die Längsnut eintauchbar ist, in eine Eingriffslage bringbar ist, in welcher sie eine Hinterschneidung der Längsnut hintergreifen. Dadurch kann die Sicherungsvorrichtung unabhängig von einem Nutausschnitt an jeder beliebigen Stelle der Längsnut in diese eingesetzt und somit besonders einfach montiert werden.

Die Eingriffsmittel sind durch eine Bewegung eines das Adapterelement zumindest teilweise umgebenden Gehäuses relativ zu dem Adapterelement aus der Eintauchlage in die Eingriffslage bringbar, wobei das Gehäuse derart ausgebildet ist, dass es sich an einer Nutumgebung der Längsnut abstützen und den Ladeboden zwischen den Eingriffsmitteln und dem Gehäuse klemmen kann. Beispielsweise können zwei beweglich gelagerte Eingriffsmittel direkt oder indirekt durch das Gehäuse auseinander gedrückt werden, um in ihre Eingriffslage zu gelangen.

Vorteilhafte Ausbildungen der Erfindung sind den Unteransprüchen, der Beschreibung und der Zeichnung zu entnehmen.

Im Nachfolgenden werden die Eingriffsmittel des Adapterelements teilweise in Einzahl beschrieben. Dabei gilt die Beschreibung in Einzahl für beide Eingriffsmittel einer erfindungsgemäßen Sicherungsvorrichtung.

Gemäß einer baulich besonders einfach zu realisierenden Ausführungsform lässt sich das Eingriffsmittel durch eine Verstellung des Betätigungselements relativ zu dem Adapterelement aus der Eintauchlage in die Eingriffslage bringen. Die Verstellung des Betätigungselements kann beispielsweise in einer Verdrehung eines Gewindebolzens relativ zu dem Adapterelement bestehen. Alternativ ist es möglich, das Eingriffsmittel durch eine Bewegung eines das Adapterelement zumindest teilweise umgebenden Gehäuses relativ zu dem Adapterelement aus der Eintauchlage in die Eingriffslage zu bringen. Beispielsweise können zwei beweglich gelagerte Eingriffsmittel direkt oder indirekt durch das Gehäuse auseinander gedrückt werden, um in ihre Eingriffslage zu gelangen.

Um eine Kombination aus Verdrehung und Verschiebung des Eingriffsmittels kontrolliert realisieren zu können, kann eine Kulissenführung vorgesehen sein, entlang derer das Eingriffsmittel während seiner Bewegung aus der Eintauchlage in die Eingriffslage verschiebbar ist.

Zur Umsetzung einer Bewegung des Betätigungselements in eine Bewegung des Eingriffsmittels können bzw. kann ein Zahnstangengetriebe und/oder ein Nockengetriebe vorgesehen sein.

Zur besonders einfachen Handhabung der Sicherungsvorrichtung ist bevorzugt ein Federelement vorgesehen, entgegen dessen Rückstellkraft ein in oder an dem Adapterelement beweglich gelagertes Eingriffsmittel aus einer Eintauchlage, in welcher es in die Längsnut eintauchbar ist, in eine Eingriffslage, in welcher es eine Hinterschneidung der Längsnut hintergreift, bringbar ist oder entgegen dessen Rückstellkraft das Eingriffsmittel aus der Eingriffslage in die Eintauchlage bringbar ist. Das Federelement unterstützt auf diese Weise eine Rückstellung des Eingriffsmittels in seine jeweils andere Lage.

Gemäß einer Ausführungsform wirkt das Federelement mit einem zum Eingreifen in die Längsnut vorgesehenen Hakenabschnitt des Eingriffsmittels und/oder mit einem dem Hakenabschnitt abgewandten Gegenabschnitt des Eingriffsmittels zusammen, um das Eingriffsmittel in seine Eintauchlage vorzuspannen. In diesem Fall handelt es sich bei dem Federelement bevorzugt um eine Schraubenfeder.

Alternativ oder zusätzlich kann das Federelement eine Drehachse für das Eingriffsmittel definieren, um welche das Eingriffsmittel in seine Eintauchlage dreht. Die Drehachse erstreckt sich im am Ladeboden montierten Zustand der Vorrichtung bevorzugt im Wesentlichen parallel zu der Längsnut. Bei dieser Variante kann das Federelement beispielsweise durch eine Blattfeder gebildet sein.

Um eine besonders zuverlässige Klemmung der Sicherungsvorrichtung an dem Ladeboden zu gewährleisten, ist vorteilhafterweise ein Mechanismus zur Sicherung des Eingriffsmittels oder der Eingriffsmittel in seiner/ihrer Eingriffslage vorgesehen. Gemäß einer besonders einfachen konstruktiven Ausführung umfasst der Sicherungsmechanismus ein das Adapterelement zumindest teilweise umgebendes Gehäuse, welches mit über das Adapterelement hervorstehenden Endabschnitten der Eingriffsmittel in Eingriff bringbar ist, um die Eingriffsmittel in ihrer Eingriffslage zu halten. Beispielsweise kann eine Aussparung in dem Gehäuse ausgebildet sein, in welcher die Endabschnitte zur Fixierung der Eingriffsmittel aufgenommen und zusammengehalten werden. In diesem Fall werden die Eingriffsmittel gewissermaßen also von außen gesichert. Alternativ oder zusätzlich kann an einer Innenseite des Gehäuses eine Erhebung ausgebildet sein, z.B. in Form einer Betätigungsplatte, welche zwischen die über das Adapterelement hervorstehenden Endabschnitte der Eingriffsmittel einfährt, um diese zur Fixierung in der Eingriffslage nach außen zu drücken. Bei dieser Variante werden die Eingriffsmittel gewissermaßen also von innen gesichert.

Gemäß einer weiteren Ausführungsform umfasst der Klemmmechanismus ein Gehäuse, in welchem das Adapterelement bewegbar aufgenommen ist. Damit sich das Gehäuse beim Ineingriffbringen des Eingriffsmittels mit der Hinterschneidung an einer Oberseite des Ladebodens abstützen kann, weist das Gehäuse eine Breite auf, die größer ist als eine Breite der Öffnung der Längsnut. Das Gehäuse kann beispielsweise in der Form eines U-Profils ausgebildet sein und das aufgenommene Adapterelement an einer Oberseite und zwei gegenüberliegenden Außenseiten umschließen. Alternativ ist aber auch ein Gehäuse vorstellbar, welches das Adapterelement mit Ausnahme der zum Ladeboden weisenden Unterseite vollständig umschließt.

Vorzugsweise kann das Adapterelement durch das Betätigungselement relativ zu dem Gehäuse bewegt werden, insbesondere in dieses hineingezogen werden, um das Eingriffsmittel mit der Hinterschneidung zur Klemmung der Sicherungsvorrichtung an dem Ladeboden in Eingriff zu bringen, oder aus diesem herausgedrückt werden, um das Eingriffsmittel und die Hinterschneidung zur Lösung der Sicherungsvorrichtung von dem Ladeboden außer Eingriff zu bringen.

Gemäß einer alternativen Ausführungsform ist das Adapterelement durch eine Verstellung des Betätigungselements relativ zu dem Adapterelement von dem Ladeboden weg bewegbar, um ein in die Längsnut eingetauchtes Eingriffsmittel kraft- und formschlüssig mit der Hinterschneidung in Eingriff zu bringen. Diese Ausführungsform hat den Vorteil, dass die Klemmung der Sicherungsvorrichtung an dem Ladeboden grundsätzlich ohne ein Gehäuse für das Adapterelement realisiert werden und somit auf das Gehäuse verzichtet werden kann.

Das wenigstens eine Eingriffsmittel kann beispielsweise die Form eines C-Profils aufweisen, dessen eines Ende in die Längsnut eintauchbar ist, um die Hinterschneidung zu hintergreifen, und dessen anderes Ende in eine Nut des Adapterelements eingreift. Gemäß einer Ausführungsform ist die Adapternut komplementär zu dem C-Profil ausgebildet, z.B. im Wesentlichen L-förmig, so dass das Eingriffsmittel lediglich durch Verschiebung entlang der Adapternut relativ zu dieser bewegbar ist. Alternativ kann die Adapternut im Vergleich zu dem C-Profil so großzügig dimensioniert sein, dass sich das Eingriffsmittel in der Nut verdrehen kann, um aus seiner Eintauchlage in seine Eingriffslage und umgekehrt gebracht zu werden.

Um zu verhindern, dass sich das in der Adapternut sitzende Eingriffsmittel unbeabsichtigt lösen kann, ist vorteilhafterweise ein Mittel zur Sicherung des in die Adapternut eingeschobenen Eingriffsmittels vorgesehen.

Ein solches Sicherungsmittel kann beispielsweise einen Sicherungsstift umfassen, welcher sich quer zu der Adapternut durch das Adapterelement hindurch erstreckt und dabei eine entsprechende Bohrung in dem C-Profil durchgreift.

Gemäß einer weiteren Variante kann das Sicherungsmittel eine Gewindebohrung umfassen, die seitlich in das Adapterelement hineinführt und in eine Durchgangsbohrung geringeren Durchmessers übergeht, welche sich bis zur Adapternut erstreckt und in welcher eine Kugel gelagert ist, die teilweise aus der Durchgangsbohrung austreten und in eine komplementär ausgebildete Vertiefung des Eingriffsmittels einrasten kann. Die Kugel ist bevorzugt durch eine Feder belastet, die von einem in die Gewindebohrung eingeschraubten Gewindestift gehalten wird.

Alternativ ist es möglich, ein Gehäuse, in welchem das Adapterelement aufgenommen ist und welches nach Art eines sich in Richtung der Längsnut erstreckenden U-Profils ausgebildet ist, an seinen in Richtung der Längsnut weisenden Stirnseiten gerade soweit von oben durch Platten zu verschließen, dass die Platten die Adapternut stirnseitig teilweise abdecken und ein darin eingeschobenes Eingriffsmittel in der Adapternut fixieren, wenn das Gehäuse auf dem Ladeboden aufsitzt, und die Adapternut und ein in die Adapternut eingeschobenes Eingriffsmittel freigeben, wenn das Gehäuse bei gelöstem Betätigungselement relativ zu dem Adapterelement ausreichend weit angehoben wird.

Denkbar ist auch eine Ausführungsform, bei welcher das Adapterelement mit Ausnahme seiner zum Ladeboden weisenden Unterseite ringsum durch das Gehäuse umschlossen ist. In diesem Fall muss das Gehäuse allerdings weiter angehoben werden als bei der vorherigen Variante, um das Eingriffsmittel in die Adapternut einzuschieben oder aus dieser zu entnehmen.

Theoretisch vorstellbar wäre sogar eine Ausführungsform, bei welcher das Adapterelement so in einem nach Art eines U-Profils ausgebildeten Gehäuse aufgenommen wird, dass die Stirnseiten des Adapterelements, an welchen das Eingriffsmittel in die Adapternut eingeschoben oder aus dieser entnommen wird, durch die Schenkel des U-Profils verschlossen werden. Bei dieser Ausführungsform muss die Hinterschneidung des Ladebodens jedoch eine besondere Stabilität aufweisen, da die bei Aktivierung des Klemmmechanismus durch das Gehäuse ausgeübte Gegenkraft versetzt zu der durch das Eingriffsmittel ausgeübten Kraft auf die Hinterschneidung einwirkt.

Noch eine weitere Möglichkeit zur Sicherung des Eingriffsmittels in der Adapternut sieht die Verwendung einer Schraube, z.B. einer Knebelschraube, als Betätigungselement vor. Das entsprechende Muttergewinde im Adapterelement ragt dabei teilweise in den waagerechten Schenkel der im Wesentlichen L-förmigen Adapternut hinein. Entsprechend befindet sich etwa mittig im oberen Schenkel des nach Art eines C-Profils ausgebildeten Eingriffsmittels eine Ausnehmung. Die Länge des Gewindeabschnitts der Schraube ist so bemessen, dass die Schraube im angezogenen Zustand in die Ausnehmung des Eingriffsmittels eingreift und dieses fixiert und gleichzeitig die Klemmung des Eingriffsmittels an die Hinterschneidung der Längsnut garantiert.

Gemäß einer alternativen Ausführungsform, die es ermöglicht, die Sicherungsvorrichtung an einer beliebigen Stelle in die Längsnut einzusetzen, ist ein erstes Eingriffsmittel einstückig mit dem Adapterelement ausgebildet und ein zweites Eingriffsmittel verschwenkbar und/oder verschiebbar an dem Adapterelement angebracht. Durch die Verschwenkbarkeit bzw. Verschiebbarkeit des zweiten Eingriffsmittels wird ein Minimum an Beweglichkeit der Eingriffsmittel bereitgestellt, das erforderlich ist, um die Eingriffsmittel unabhängig von einem Ausschnitt der Längsnut an einer beliebigen Stelle in diese einsetzen zu können.

Vorteilhafterweise ist wenigstens ein Federelement in dem Adapterelement angeordnet, um das zweite Eingriffsmittel in Eingriff mit einer Hinterschneidung der Längsnut zu drängen. Das Federelement sorgt mit anderen Worten dafür, dass das zweite Eingriffsmittel nach vollständiger Einführung in die Längsnut automatisch in eine Lage gebracht wird, in der es eine zugeordnete Hinterschneidung hintergreift. Selbst wenn das Federelement wider Erwarten versagen sollte, ist der Eingriff des zweiten Eingriffsmittels mit der Hinterschneidung sichergestellt, da das Gehäuse zur Aufnahme des Adapterelements dem beweglichen zweiten Eingriffsmittel ausreichend Widerstand entgegenbringt.

Um das zweite Eingriffsmittel zum Einsetzen der Sicherungsvorrichtung in die Längsnut oder zum Entnehmen der Sicherungsvorrichtung aus der Längsnut in eine Lage bringen zu können, in welcher es die zugeordnete Hinterschneidung frei gibt, ist das Gehäuse zur Aufnahme des Adapterelements bevorzugt mit einer Öffnung versehen ist, über welche das zweite Eingriffsmittel von außen zugänglich ist.

Noch eine alternative Ausführungsform, die es ermöglicht, die Sicherungsvorrichtung an einer beliebigen Stelle in die Längsnut einzusetzen, besteht darin, zwei beweglich in oder an dem Adapterelement gelagerte Eingriffsmittel nach Art eines Scherenmechanismus aus der Eintauchlage in die Eingriffslage zu bewegen. Ein solcher Scherenmechanismus lässt sich zur Einführung in die Längsnut z.B. gegen eine Rückstellfeder zusammendrücken und weitet sich danach innerhalb der Längsnut aus, um das Eingriffsmittel mit der Hinterschneidung der Längsnut in Eingriff zu bringen und die Sicherungsvorrichtung in der Längsnut festzuklemmen.

Nachfolgend werden verschiedene Ausführungsformen der Erfindung rein beispielhaft unter Bezugnahme auf die beigefügte Zeichnung beschrieben. Es zeigen:
- Fig. 1: eine Querschnittsansicht einer Papierrolle, die durch einen Zurrgurt und Radsicherungskeile gesichert ist, welche mittels Sicherungsvorrichtungen an einem Ladeboden fixiert sind;
- Fig. 2: eine Querschnittsansicht einer der Sicherungsvorrichtungen von in Fig. 1;
- Fig. 3: eine perspektivische Ansicht einer weiteren Sicherungsvorrichtung mit einem Radsicherungskeil;
- Fig. 4: eine perspektivische Ansicht noch einer weiteren Ausführungsform einer Sicherungsvorrichtung mit einem Radsicherungskeil;
- Fig. 5: eine perspektivische Ansicht einer Sicherungsvorrichtung zur Sicherung einer Papierrolle ohne Radsicherungskeil;
- Fig. 6a und b: perspektivische Ansichten eines Klemmmechanismus einer Sicherungsvorrichtung;
- Fig. 7: (a) eine Teilschnittansicht und (b) eine perspektivische Ansicht einer Sicherungsvorrichtung ;
- Fig. 8: (a) und (b) Vertikalschnittansichten, (c) eine Seitenansicht und (d) eine Horizontalschnittansicht einer Sicherungsvorrichtung gemäß einer Ausführungsform der Erfindung;
- Fig. 9: (a), (d) Seitenansichten und (b), (c), (e)-(g) verschiedene Schnittansichten einer Sicherungsvorrichtung gemäß einer weiteren Ausführungsform der Erfindung;
- Fig. 10 a und b: Seitenansichten einer Variante der Ausführungsform von Fig. 9;
- Fig. 11: eine Seitenansicht noch einer weiteren Variante der Ausführungsform von Fig. 9;
- Fig. 12: eine Seitenansicht einer Sicherungsvorrichtung gemäß noch einer weiteren Ausführungsform der Erfindung;
- Fig. 13: Frontansichten einer Sicherungsvorrichtung gemäß noch einer weiteren Ausführungsform der Erfindung (a) vor einer Klemmung am Ladeboden und (b) im geklemmten Zustand;
- Fig. 14: eine perspektivische Teilansicht der Sicherungsvorrichtung von Fig. 13 im geklemmten Zustand; und
- Fig. 15: eine perspektivische Außenansicht der Sicherungsvorrichtung von Fig. 13 im geklemmten Zustand.

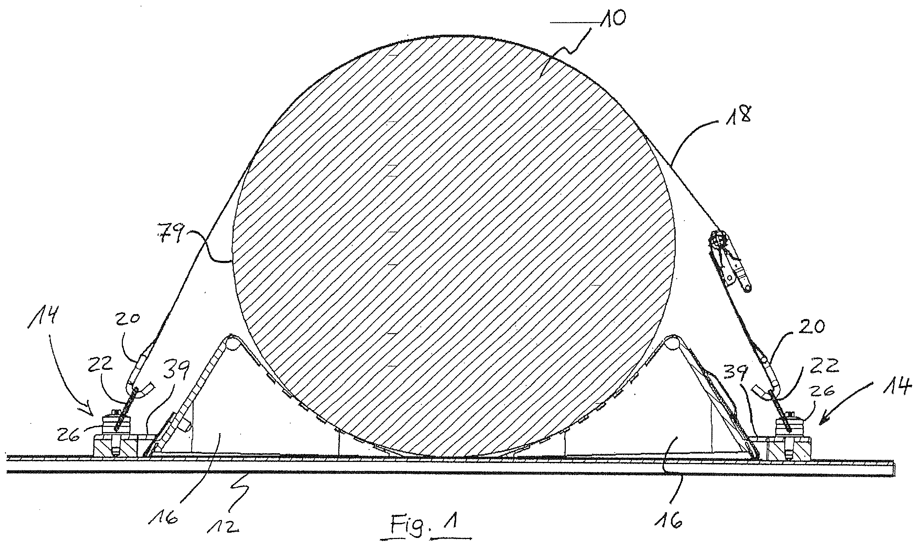

Die in Fig. 1 bis 7 gezeigten Sicherungsvorrichtungen dienen der Erläuterung und stellen keine erfindungsgemäßen Ausführungsformen dar.

Fig. 1 zeigt eine Papierrolle 10, die auf einem Ladeboden 12, beispielsweise eines Containers oder Transportfahrzeugs, liegt und auf gegenüberliegenden Seiten jeweils durch einen handelsüblichen Radsicherungskeil 16 gesichert ist. Jeder Radsicherungskeil 16 ist mittels einer Sicherungsvorrichtung 14 an dem Ladeboden 12 fixiert. Zusätzlich ist die Papierrolle 10 mittels eines Zurrgurts 18 gesichert, der an seinen Enden Zurrhaken 20 aufweist, die in Ösen 24 von Verankerungselementen 22 der Sicherungsvorrichtungen 14 eingehakt sind.

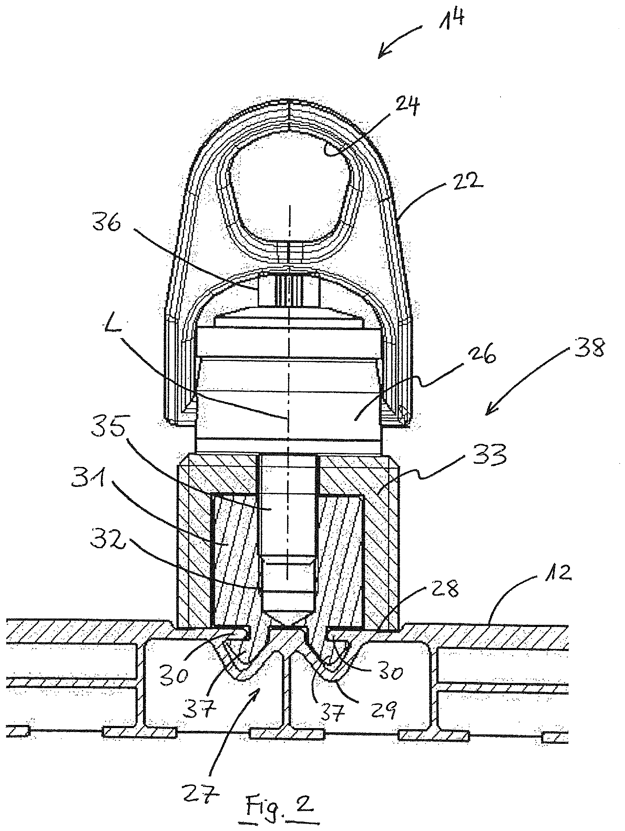

Wie Fig. 2 zeigt, steht jede Sicherungsvorrichtung 14 in Eingriff mit einer von mehreren Längsnuten 27 des Ladebodens 12, die sich in einer Längsrichtung des Containers oder Transportfahrzeugs erstrecken. Bei dem in Fig. 1 dargestellten Ausführungsbeispiel liegt die Papierrolle 10 quer zur Längsrichtung des Containers oder Transportfahrzeugs, so dass die dargestellten Sicherungsvorrichtungen 14 beide in derselben Längsnut 27 sitzen. Die Papierrolle 10 könnte aber auch in Längsrichtung des Containers oder Transportfahrzeugs orientiert sein, in welchem Fall die Sicherungsvorrichtungen 14 mit unterschiedlichen Längsnuten 27 in Eingriff stünden.

Die in Fig. 2 dargestellte Längsnut 27 besitzt einen im Querschnitt gesehen W-förmigen Nutboden 29, der an seiner Oberseite von einander gegenüberliegenden Hinterschneidungen 30 teilweise überragt wird. Bei der vorliegenden Längsnut 27 handelt es sich also um eine sogenannte W-Nut. Alternativ könnte die Längsnut 27 aber auch als T-Nut oder in einer anderen geeigneten Form ausgebildet sein.

Die Oberseiten der Hinterschneidungen 30 und daran angrenzende Bereiche der Oberseite des Ladebodens 12 definieren eine Nutumgebung 28. Außerdem ist die Längsnut 27 mit einem nicht gezeigten Nutausschnitt zum Eintauchen von Ladungssicherungselementen, wie z.B. der hier beschriebenen Sicherungsvorrichtung 14, versehen.

Die Sicherungsvorrichtung 14 umfasst ein nach unten offenes Gehäuse 33 in der Gestalt eines U-Profils, in welchem ein Adapterelement 31 beweglich aufgenommen ist, das mittels eines Betätigungselements 34 in das Gehäuse 33 hinein gezogen oder aus diesem hinaus gedrückt werden kann. Im vorliegenden Ausführungsbeispiel handelt es sich bei dem Betätigungselement 34 um eine Sechskantschraube 35, die mit einer Gewindebohrung 32 des Adapterelements 31 in Eingriff steht und sich nach oben aus dem Gehäuse 33 herauserstreckt, so dass ein Kopf 36 der Schraube von außen betätigbar ist.

Das Adapterelement 31 weist an seiner dem Gehäuse 33 abgewandten Unterseite zwei hakenförmige Eingriffsmittel 37 auf, welche einstückig mit dem Adapterelement 31 ausgebildet und so geformt sind, dass sie die Hinterschneidungen 30 hintergreifen, wenn sie in die Längsnut 27 eingesetzt sind.

Das Gehäuse 33, das Adapterelement 31 und die Schraube 35 bilden zusammen einen Klemmmechanismus 38 zur Klemmung der Sicherungsvorrichtung 14 an den Ladeboden 12. Hierzu werden zunächst die Eingriffsmittel 37 über den Nutausschnitt in die Längsnut 27 eingetaucht. Dann wird die Sicherungsvorrichtung 14 entlang der Längsnut 27 bis in die gewünschte Position verschoben. Durch ein Anziehen der Schraube 35 am Schraubenkopf 36 wird anschließend das Adapterelement 31 in das Gehäuse 33 hineinbewegt, wodurch die Eingriffsmittel 37 mit den Hinterschneidungen 30 in Eingriff gebracht werden. Dabei stützt sich das Gehäuse an der Nutumgebung 28 ab, d.h. der Ladeboden 12 wird zwischen den Eingriffsmitteln 37 des Adapterelements 31 und dem Gehäuse 33 geklemmt und die Sicherungsvorrichtung 14 somit an dem Ladeboden 12 fixiert.

Zwischen dem Schraubenkopf 36 und der Oberseite des Gehäuses 33 ist die Schraube 35 von einer Buchse 26 umgeben, welche um die Längsachse der Schraube 35 verdrehbar gelagert ist. An der Buchse 26 ist das Verankerungselement 22 mit der Öse 24 zur Aufnahme eines Zurrhakens 20 gelagert, und zwar verschwenkbar um eine zur Längsachse L der Schraube 35 rechtwinklig orientierte Achse.

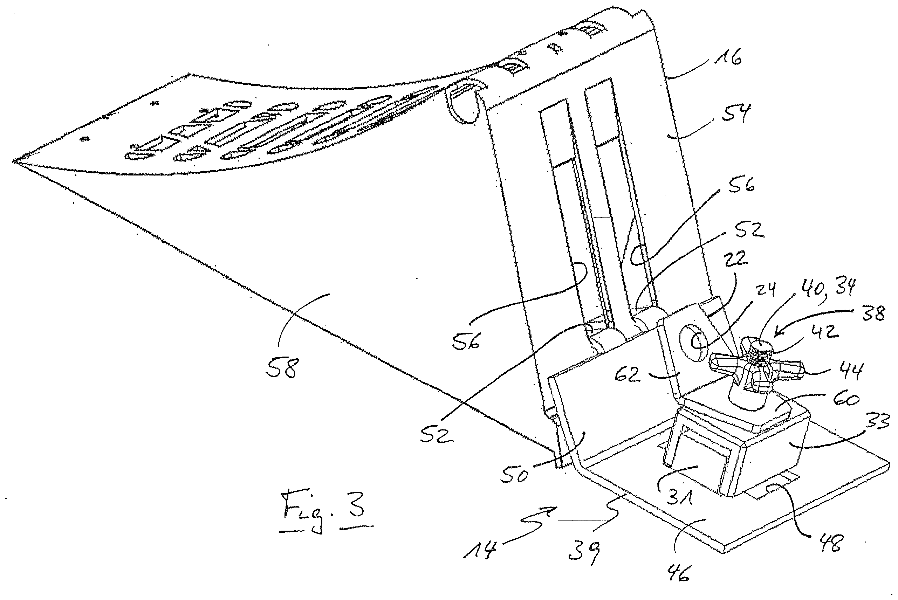

Wie in Fig. 1 zu erkennen ist weist die Sicherungsvorrichtung 14 ein einstückig mit dem Gehäuse 33 ausgebildetes Fixierelement 39 auf, welches mit dem ihr zugeordneten Radsicherungskeil 16 in Eingriff steht, um diesen zu fixieren, wenn die Sicherungsvorrichtung 14 an den Ladeboden 12 geklemmt ist. Das Fixierelement 39 kann zu diesem Zweck mit Finger- oder Zungenabschnitten versehen sein, die in Aussparungen 56 an der Rückseite 54 des Radsicherungskeils 16 eingreifen oder an gegenüberliegenden Seitenflächen 58 des Radsicherungskeils 16 angreifen (vgl. Fig. 3).

Sollte ein zu fixierender Radsicherungskeil 16 keine Aussparungen 56 aufweisen oder für ein Umgreifen durch die Finger- oder Zungenabschnitte zu breit sein, kann das Fixierelement 39 alternativ oder zusätzlich auch einen schräg orientierten Schenkelabschnitt aufweisen, der zur Fixierung des Radsicherungskeils 16 an dessen Rückseite 54 zur Anlage gebracht wird und bei Klemmung der Sicherungsvorrichtung 14 an den Ladeboden 12 den Radsicherungskeil 16 an den Ladeboden 12 presst.

In Fig. 3 ist ein weiteres Beispiel einer nichterfindungsgemäßen Sicherungsvorrichtung 14 gezeigt. Der Klemmmechanismus 38 dieser Sicherungsvorrichtung ähnelt weitgehend dem anhand von Fig. 2 beschriebenen Klemmmechanismus mit dem Unterschied, dass das Betätigungselement 34 hier nicht durch eine Schraube 35 gebildet ist, sondern statt dessen durch einen Gewindebolzen 40, der ein Gewinde 42 an seinem zugänglichen oberen Ende aufweist. Zur Betätigung des Betätigungselements 34 steht eine von Hand anziehbare Mutter 44, im vorliegenden Ausführungsbeispiel eine Knebel- oder Sterngriffmutter, mit dem Gewinde 42 in Eingriff. Das andere Ende des Gewindebolzens 40 ist in geeigneter Weise mit dem Adapterelement 31 fest verbunden, z.B. verschraubt, verbolzt, verklebt oder verschweißt.

Im weiteren Unterschied zur Sicherungsvorrichtung von Fig. 2 ist das Fixierelement 39 der Sicherungsvorrichtung 14 von Fig. 3 durch eine separate abgewinkelten Platte gebildet, welche einen horizontalen ersten Plattenabschnitt 46, der zwischen dem Ladeboden 12 und dem Gehäuse 33 angeordnet ist, und einen schräg nach oben ragenden zweiten Plattenabschnitt 50 umfasst, dessen Neigung an die Neigung der Rückseite 54 des Radsicherungskeils 16 im Wesentlichen angepasst ist und der an der Rückseite 54 des Radsicherungskeils 16 anliegt, um bei Klemmung der Sicherungsvorrichtung 14 an den Ladeboden 12 den Radsicherungskeil 16 an den Ladeboden 12 zu pressen. Auf eine Unterseite des horizontalen ersten Plattenabschnitts 46 kann eine Antirutschmatte aufgebklebt sein.

Der horizontale erste Plattenabschnitt 46 weist eine Aussparung 48 auf, durch die das Adapterelement 31 des Klemmmechanismus 38 in die Längsnut 27 des Ladebodens 12 eingreifen kann. Gleichzeitig ist die Aussparung 48 so dimensioniert, dass das Gehäuse 33 zumindest teilweise auf dem horizontalen ersten Plattenabschnitt 46 aufsitzt, damit der horizontale erste Plattenabschnitt 46 und dadurch das Fixierelement 39 und der dadurch fixierte Radsicherungskeil 16 beim Anziehen der Mutter 44 an den Ladeboden geklemmt wird. Die Aussparung 48 ist so gestaltet, dass sich der horizontale erste Plattenabschnitt 46 auch um 90° relativ zu dem Klemmmechanismus 38 verdreht anordnen lässt, um eine Fixierung von sowohl quer als auch längs zur Längsnut 27 orientierten Papierrollen zu ermöglichen. Grundsätzlich kann die Aussparung 48 auch so gestaltet sein, dass eine 360° Verdrehung des horizontalen ersten Plattenabschnitts 46 relativ zu dem Klemmmechanismus 38 möglich ist, vorzugsweise um beliebige Winkel.

Wie in Fig. 3 zu erkennen ist, gehen zwei Fingerabschnitte 52 aus dem zweiten Plattenabschnitt 50 hervor, die in Aussparungen 56 an der Rückseite 54 des Radsicherungskeils 16 eingreifen. Alternativ oder zusätzlich kann der zweite Plattenabschnitt 50 Zungenabschnitte aufweisen (nicht gezeigt), welche zur Fixierung des Radsicherungskeils 16 an gegenüberliegenden Seitenflächen 58 des Radsicherungskeils 16 angreifen.

Im weiteren Unterschied zur Sicherungsvorrichtung von Fig. 2 ist das Verankerungselement 22 der in Fig. 3 dargestellten Sicherungsvorrichtung durch ein abgewinkeltes Blech gebildet, welches einen ersten Blechabschnitt 60 und einen zweiten Blechabschnitt 62 umfasst. Der erste Blechabschnitt 60 ist zumindest annähernd horizontal ausgerichtet, während der zweite Blechabschnitt 62 von dem ersten Blechabschnitt 60 schräg nach oben ragt und die bereits erwähnte Öse 24 zu Aufnahme eines Zurrhakens 20 umfasst.

Der erste Blechabschnitt 60 ist zwischen dem Gehäuse 33 und der Mutter 44 angeordnet und mit einer nicht gezeigten Bohrung versehen, durch welche sich der Gewindebolzen 40 mit etwas Spiel erstreckt. Durch ein Anziehen der Mutter 44 wird das Verankerungselement 22 an dem Gehäuse 33 fixiert.

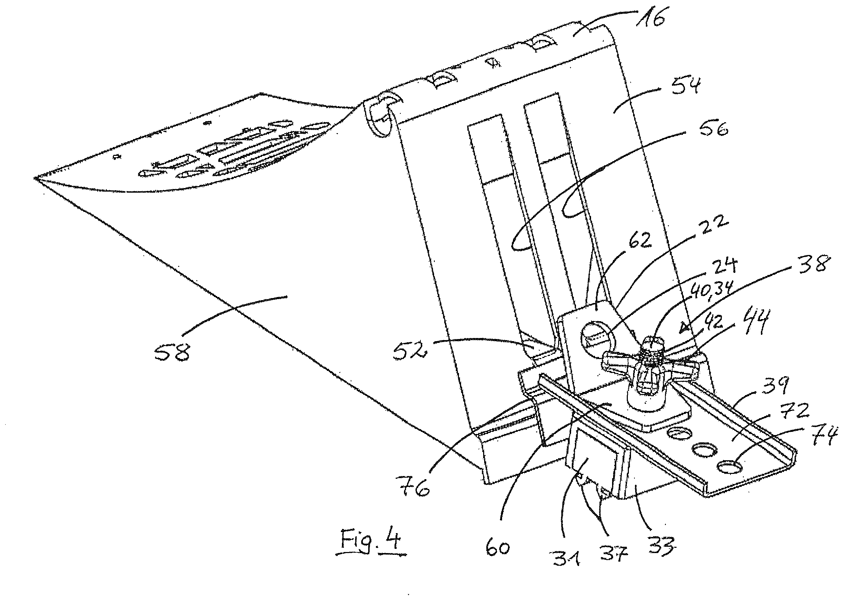

Fig. 4 zeigt ein weiteres Beispiel einer nichterfindungsgemäßen Sicherungsvorrichtung 14, die sich von der Sicherungsvorrichtung von Fig. 3 lediglich in der Gestalt des Fixierelements 39 unterscheidet. So ist das Fixierelement 39 bei der in Fig. 4 dargestellten Sicherungsvorrichtung nicht zwischen dem Gehäuse 33 und dem Ladeboden 12 angeordnet, sondern an der Oberseite des Gehäuses 33 zwischen dem Gehäuse 33 und der anziehbaren Mutter 44.

Konkret ist ein Horizontalabschnitt 72 des Fixierelements 39 durch ein nach oben offenes U-Profil gebildet, in dessen Boden mehrere Bohrungen 74 in Profillängsrichtung gesehen zueinander beabstandet angeordnet sind. Die Bohrungen 74 dienen zur Aufnahme des Gewindebolzens 40 und sind an den Durchmesser des Gewindebolzens 40 derart angepasst, dass sich das Fixierelement 39 um den Gewindebolzen 40 herum verdrehen kann.

An einem Ende des Horizontalabschnitts 72 ist ein stufenförmig abgewinkelter Blechabschnitt 76 angeformt, der an die Rückseite 54 des Radsicherungskeils 16 angepasst ist, um den Radsicherungskeil 16 beim Anziehen des Klemmmechanismus 38 an den Ladeboden 12 zu pressen, und aus dem außerdem zwei Fingerabschnitte 52 hervorgehen, die in die Aussparungen 56 an der Rückseite 54 des Radsicherungskeils 16 eingreifen.

Das Verankerungselement 22 dieser Sicherungsvorrichtung ist wie in Verbindung mit Fig. 3 ausgebildet und zwischen dem Horizontalabschnitt 72 des Fixierelements 39 und der Mutter 44 angeordnet.

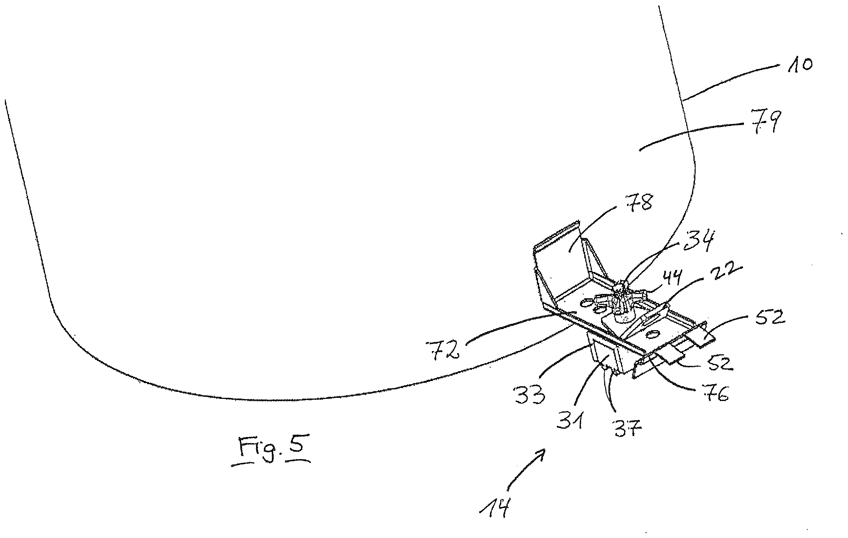

Fig. 5 zeigt noch ein weiteres Beispiel einer nichterfindungsgemäßen Sicherungsvorrichtung 14, die sich von der in Fig. 4 gezeigten Sicherungsvorrichtung lediglich darin unterscheidet, dass der Horizontalabschnitt 72 des Fixierelements 39 an seiner dem stufenförmig abgewinkelten Blechabschnitt 76 abgewandten Ende zusätzlich einen Schenkelabschnitt 78 aufweist, der sich von dem Horizontalabschnitt 72 im Wesentlichen rechtwinklig nach oben erstreckt und eine direkte Fixierung z.B. einer aufrecht stehenden Papierrolle 10 ermöglicht, indem er an einer Mantelfläche 79 der Papierrolle 10 zur Anlage gebracht wird.

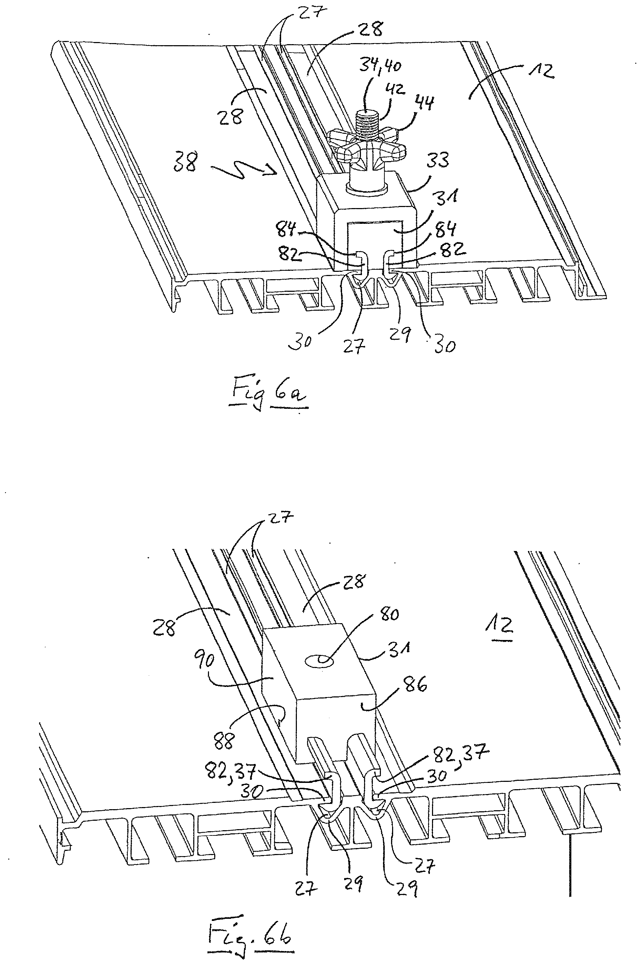

Fig. 6 zeigt ein weiteres Beispiel einer nichterfindungsgemäßen eines Klemmmechanismus einer Sicherungsvorrichtung 14, welche ein Verankerungselement 22 und/oder ein Fixierelement 39 und/oder ein beliebiges anderes Ladungssicherungsmittel umfassen kann und welche gegenüber den vorherigen Sicherungsvorrichtungen den besonderen Vorteil besitzt, dass sie sich unabhängig von einem Nutausschnitt der Längsnut 27 an einer beliebigen Stelle der Längsnut 27 in diese einsetzen lässt.

Der Klemmmechanismus von Fig. 6 ähnelt dem in Fig. 4 und Fig. 5 dargestellten Klemmmechanismus insofern, als er ein Adapterelement 31, das in einem U-profilartigen Gehäuse 33 aufgenommen ist, und ein Betätigungselement 34 in Form eines Gewindebolzens 40 umfasst, dessen zugängliches oberes Ende mit einem Gewinde 42 versehen ist und dessen anderes Ende in einer Bohrung 80 (Fig. 6b) des Adapterelements 31 sitzt und hierin mit dem Adapterelement 31 fest verbunden ist, z.B. verschraubt, verbolzt, verklebt oder verschweißt ist. Zur Betätigung des Betätigungselements 34 steht eine von Hand anziehbare Mutter 44, im dargestellten Ausführungsbeispiel eine Sterngriffmutter, mit dem Gewinde 42 des Gewindebolzens 40 in Eingriff.

Im Unterschied zu den vorherigen Sicherungsvorrichtung sind die Eingriffsmittel 37 der in Fig. 6 gezeigten Sicherungsvorrichtung nicht einstückig mit dem Adapterelement 31 ausgebildet, sondern als zwei separate Bauteile in Form von C-Profilen 82. Die Verbindung der C-Profile 82 mit dem Adapterelement 31 erfolgt über zwei komplementär ausgebildete, im Wesentlichen L-förmige Adapternuten 84, die sich parallel zueinander von einer ersten Stirnseite 86 des Adapterelements 31 zu einer gegenüberliegenden zweiten Stirnseite durch das Adapterelement 31 hindurch erstrecken.

Zur Montage der Sicherungsvorrichtung 14 an dem Ladeboden 12 werden die C-Profile 82 zunächst in die Längsnut 27 eingesetzt und dann in die Adapternuten 84 eingeführt (Fig. 6b). Anschließend wird das Adapterelement 31 soweit über die C-Profile 82 geschoben, bis diese vollständig in dem Adapterelement 31 aufgenommen sind (Fig. 6a).

Zur Sicherung der C-Profile 82 in dem Adapterelement 31 sind zwei Bohrungen 88 vorgesehen, die sich von gegenüberliegenden Außenseiten 90 des Adapterelements 31 quer zur Längserstreckung der Adapternuten 84 bis zur jeweils nächstgelegenen Adapternut 84 erstrecken. Jede Bohrung 88 weist einen außenliegenden Gewindeabschnitt mit einem ersten Durchmesser, in welchen ein Gewindestift eingeschraubt ist, und einen innenliegenden Abschnitt mit einem geringeren zweiten Durchmesser auf, in welchem eine Kugel gelagert ist. Die Kugel wird durch eine Feder, die sich an dem Gewindestift abstützt, nach innen gedrängt und rastet in eine entsprechend ausgebildete Vertiefung des in die Adapternut 84 eingeführten und korrekt positionierten C-Profils 82 ein, wodurch ein unbeabsichtigtes Herausrutschen des C-Profils 82 aus der Adapternut 84 zumindest erschwert wird.

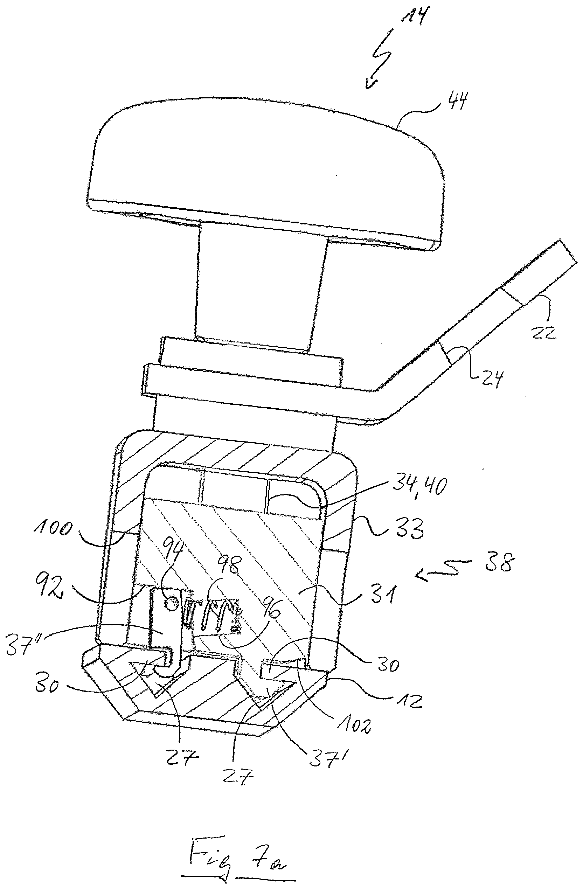

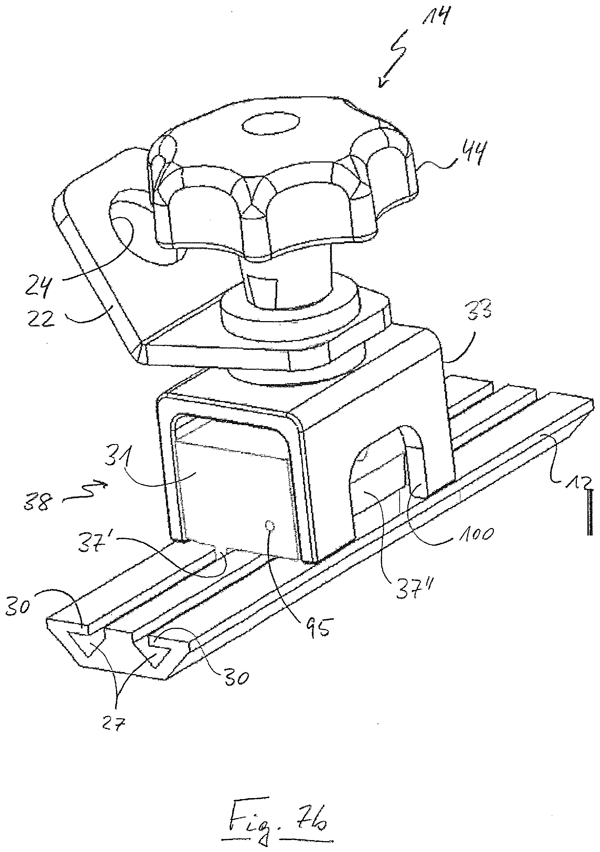

Fig. 7 zeigt noch ein weiteres Beispiel einer nichterfindungsgemäßen Sicherungsvorrichtung 14, welche sich ähnlich wie die Sicherungsvorrichtung von Fig. 6 unabhängig von einem Nutausschnitt der Längsnut 27 an einer beliebigen Stelle der Längsnut 27 in diese einsetzen lässt. In Fig. 7 ist die Sicherungsvorrichtung 14 mit einem Verankerungselement 22 ausgerüstet, wie es anhand von Fig. 3 bereits beschrieben wurde. Zusätzlich oder alternativ kann die Sicherungsvorrichtung 14 von Fig. 7 aber auch ein Fixierelement 39 und/oder ein beliebiges anderes Ladungssicherungsmittel umfassen.

Der Klemmmechanismus 38 der Sicherungsvorrichtung 14 von Fig. 7 ähnelt dem in Fig. 6 dargestellten Klemmmechanismus 38 insofern, als er ein Adapterelement 31, das in einem U-profilartigen Gehäuse 33 aufgenommen ist, und ein Betätigungselement 34 in Form eines Gewindebolzens 40 umfasst, dessen zugängliches oberes Ende mit einem Gewinde 42 (Fig. 6b) versehen ist und dessen anderes Ende in einer Bohrung 80 (Fig. 6b) des Adapterelements 31 sitzt und hierin mit dem Adapterelement 31 fest verbunden ist, z.B. verschraubt, verbolzt, verklebt oder verschweißt ist. Zur Betätigung des Betätigungselements 34 steht eine von Hand anziehbare Mutter 44, im dargestellten Ausführungsbeispiel eine Knebelmutter, mit dem Gewinde 42 des Gewindebolzens 40 in Eingriff.

Im Unterschied zu den vorherigen Sicherungsvorrichtungen weist das Adapterelement 31 der in Fig. 7 gezeigten Sicherungsvorrichtung ein nach Art von Fig. 2 einstückig mit dem Adapterelement 31 ausgebildetes erstes Eingriffsmittel 37' sowie ein durch ein separates Bauteil gebildetes zweites Eingriffsmittel 37" auf, welches teilweise in einer zur Seite und nach unten hin offenen Aussparung 92 des Adapterelements 31 untergebracht ist.

Im Bereich seines oberen Endes ist das zweite Eingriffsmittel 37" um eine zur Längsnut 27 parallele Achse verschwenkbar an dem Adapterelement 31 angelenkt. Zu diesem Zweck weist das zweite Eingriffsmittel 37" eine Längsbohrung 94 auf, durch die sich ein nicht gezeigter Stift des Adapterelements 31 zur Lagerung des zweiten Eingriffsmittels 37" erstreckt, der seinerseits in entsprechenden Lagerbohrungen 95 (Fig. 7b) des Adapterelements 31 gelagert ist.

An seinem unteren Ende ist das zweite Eingriffsmittel 37" entsprechend dem ersten Eingriffsmittel 37' hakenförmig ausgebildet, um eine der Hinterschneidungen 30 der Längsnut 27 hintergreifen zu können.

In dem Adapterelement 31 sind ferner zwei Querbohrungen 96 vorgesehen, die sich auf gegenüberliegenden Seiten der Bohrung 80 (Fig. 6b) für das Betätigungselement 34 erstrecken und in die Aussparung münden. In den Querbohrungen 96 sind Schraubendruckfedern 98 angeordnet, welche das zweite Eingriffsmittel 37" nach außen drängen.

In dem Gehäuse 33 ist eine mit der Aussparung 92 des Adapterelements 31 ausgerichtete seitliche Gehäuseöffnung 100 vorgesehen, durch welche das zweite Eingriffsmittel 37" von außen zugänglich ist und welche es erlaubt, das zweite Eingriffsmittel 37" entgegen einer Rückstellkraft der Schraubendruckfedern 98 nach innen zu schwenken.

Zum Einsetzen der Sicherungsvorrichtung 14 in die Längsnut 27 wird zunächst das Gehäuse 33 relativ zu dem Adapterelement 31 angehoben. Dann wird das Adapterelement 31 in einer Winkellage, d.h. leicht verkippt, auf die Nutumgebung 28 aufgesetzt. Das Adapterelement 31 ist in einem der Aussparung 92 gegenüberliegenden Bereich seiner Unterseite mit einer Fase 102 versehen, um bereits im gekippten Zustand ein teilweises Eingreifen des ersten Eingriffsmittels 37' in die Längsnut 27 zu erlauben.

Durch eine Verschwenkung des Adapterelements 31 um seinen Auflagepunkt auf der Nutumgebung 28 wird die Sicherungsvorrichtung 14 anschließend aufgerichtet und das erste Eingriffsmittels 37' um die zugeordnete Hinterschneidung 30 in die Längsnut 27 hineingedreht. Gleichzeitig wird das zweite Eingriffsmittel 37" manuell oder mittels eines Werkzeugs über die seitliche Gehäuseöffnung 100 nach innen gedrückt, so dass das zweite Eingriffsmittel 37" ebenfalls in die Längsnut 27 eingreifen kann.

Im vollständig aufgerichteten Zustand der Sicherungsvorrichtung 14 wird das zweite Eingriffsmittel 37" von außen freigegeben, so dass es nun von den Schraubendruckfedern 98 nach außen gedrängt wird und dadurch wie das erste Eingriffsmittel 37' seine zugeordnete Hinterschneidung 30 hintergreift.

Abschließend wird das Adapterelement 31 in der bereits beschriebenen Weise durch Betätigung der Mutter 44 relativ zu dem Gehäuse 33 angezogen und die Sicherungsvorrichtung 14 dadurch an dem Ladeboden 12 geklemmt.

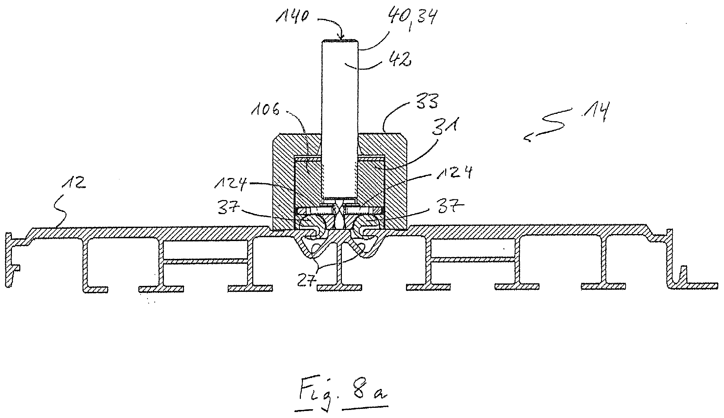

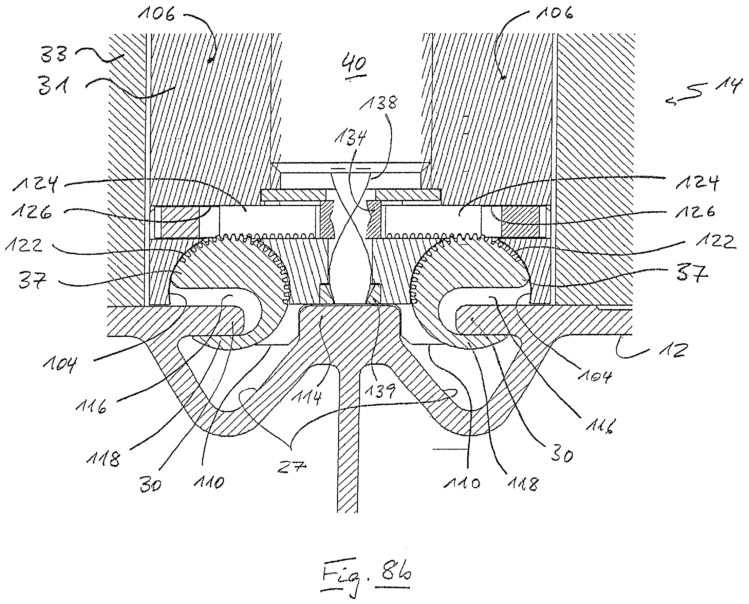

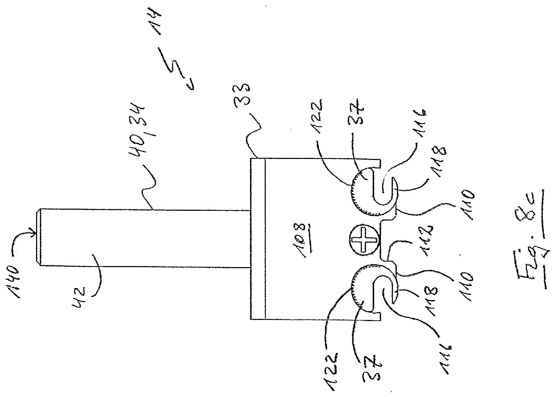

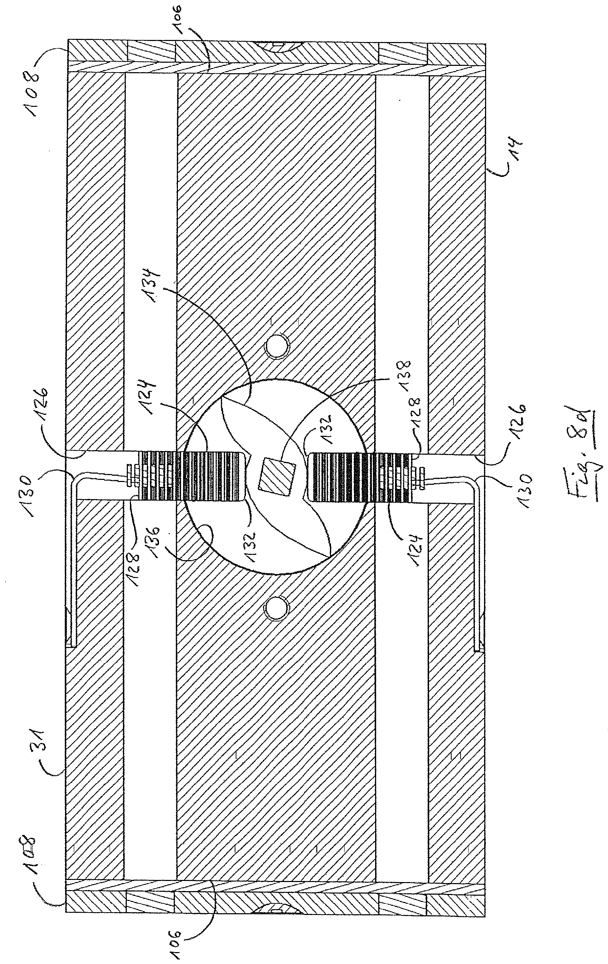

Fig. 8 zeigt eine erfindungsgemäße Ausführungsform einer Sicherungsvorrichtung 14, welche sich ähnlich wie die Ausführungsformen von Fig. 6 und 7 unabhängig von einem Nutausschnitt der Längsnut 27 an einer beliebigen Stelle der Längsnut 27 in diese einsetzen lässt. In Fig. 8 ist die Sicherungsvorrichtung 14 ohne Ladungssicherungsmittel dargestellt. Wie die vorherigen Ausführungsformen kann aber auch diese Sicherheitsvorrichtung 14 mit einem Verankerungselement 22, einem Fixierelement 39 und/oder einem beliebigen anderen Ladungssicherungsmittel ausgerüstet sein.

Der Klemmmechanismus 38 der Sicherungsvorrichtung 14 von Fig. 8 ähnelt den voranstehend beschriebenen Klemmmechanismen 38 insofern, als er ein Adapterelement 31, das in einem U-profilartigen Gehäuse 33 aufgenommen ist, und ein Betätigungselement 34 in Form eines Gewindebolzens 40 umfasst, dessen zugänglicher oberer Abschnitt mit einem Gewinde 42 versehen ist und dessen unterer Abschnitt in einer Bohrung 80 des Adapterelements 31 sitzt und hierin verdrehbar verankert ist, z.B. verschraubt ist. Die Betätigung des Betätigungselements 34 erfolgt wie voranstehend beschrieben mittels einer nicht gezeigten, von Hand anziehbaren Mutter 44, z.B. einer Knebelmutter, die mit dem Gewinde 42 des Gewindebolzens 40 in Eingriff steht.

Das Adapterelement 31 ist an seiner dem Ladeboden 12 zugewandten Unterseite mit zwei sich parallel zur Längsnut 27 erstreckenden Vertiefungen 104 versehen, die jeweils einen halbkreisförmigen Querschnitt aufweisen. In jeder Vertiefung 104 ist ein bolzenförmiges Eingriffsmittel 37 um seine jeweilige Längsmittelachse verdrehbar gelagert. Die Eingriffsmittel 37 stehen jeweils an beiden Enden etwas über die Stirnseiten 106 des Adapterelements 31 hervor.

Um ein Herausfallen der Eingriffsmittel 37 aus den Vertiefungen 104 zu verhindern ist das U-profilartige Gehäuse 33 stirnseitig jeweils durch eine Abschlussplatte 108 verschlossen, die an ihrem unteren Rand zwei Fortsätze 110 aufweist, die jeweils eines der Eingriffsmittel 37 teilweise untergreifen (Fig. 8c). Die Fortsätze 110 sind so dimensioniert, dass sie im montierten Zustand der Sicherungsvorrichtung 14 in die W-förmige Längsnut 27 eingreifen. Dabei definieren die Fortsätze 110 zwischen sich eine Aussparung 112, die an einen Mittelsteg 114 der W-förmigen Längsnut 27 angepasst ist.

Die Eingriffsmittel 37 sind jeweils aus einem zylindrischen Grundköper hergestellt, in den ein sich über die axiale Länge des Grundkörpers erstreckender seitlicher Ausschnitt 116 eingebracht ist, welcher den Eingriffsmitteln 37 einen klauenförmigen Querschnitt verleiht. Dabei sind die Eingriffsmittel 37 jeweils so dimensioniert und angeordnet, dass ein den Ausschnitt 116 begrenzender unterer Teil 118 des Eingriffsmittels 37 durch eine Verdrehung des Eingriffsmittels 37 innerhalb seiner Vertiefung 104 in die Längsnut 27 hinein gedreht werden und eine zugeordnete Hinterschneidung 30 der Längsnut 27 hintergreifen kann.

Zur seiner Verdrehung ist jedes Eingriffsmittel 37 an seiner dem unteren Teil 118 abgewandten Oberseite mit einer Zahnung 122 versehen, die mit einer zugehörigen Zahnstange 124 kämmt, die sich in einer entsprechenden Bohrung 126 in dem Adapterelement sowohl quer zu dem zugeordneten Eingriffsmittel 37 als auch quer zu dem Gewindebolzen 40 erstreckt.

Jede Zahnstange 124 ist mittels eines an einem äußeren Ende 128 der Zahnstange 124 angreifenden Federelements 130 nach innen vorgespannt (Fig. 8d). Innere Enden 132 der Zahnstangen 124 wirken dagegen mit einem Nockenelement 134 zusammen, welches in einer entsprechenden Aussparung 136 des Adapterelements 31 um eine zur Längsmittelachse des Gewindebolzens 40 koaxiale Achse drehbar gelagert ist.

Das Nockenelement 134 sitzt drehfest auf einem tordierten Vierkantstab 138, welcher in einer in die untere Stirnseite des Gewindebolzens 40 eingebrachten Vierkantbohrung sitzt und somit drehfest mit dem Gewindebolzen 40 verbunden ist. Ein unteres Ende des Vierkantstabs 138 ist in einem Lager 139 an einer Unterseite des Adapterelements 31 drehbar gelagert.

Die Verdrehung des Vierkantstabs 138 und somit des Nockenelements 134 erfolgt durch eine Verdrehung des Gewindebolzens 40 relativ zu dem Adapterelement 31. Hierzu weist der Gewindebolzen 40 an seinem oberen Ende eine Bitaufnahme 140 auf, die z.B. zur Aufnahme eines Sechskantbits, I-Stern- oder Torx-Bits oder andere geeignete Bitformen ausgebildet sein kann.

Durch eine Verdrehung des Nockenelements 134 in die eine Richtung lassen sich die Zahnstangen 124 entgegen der Rückstellkraft der Federelemente 130 nach außen bewegen, während eine Verdrehung des Nockenelements 134 in die andere Richtung eine durch die Federelemente 130 forcierte Bewegung der Zahnstangen 124 nach innen erlaubt.

Eine Bewegung der Zahnstangen 124 nach innen bewirkt eine Verdrehung der Eingriffsmittel 37 in die in Fig. 8a und 8b dargestellte Eingriffslage, in welcher die unteren Teile der 118 der Eingriffsmittel 37 die Hinterschneidungen 30 hintergreifen, die Hinterschneidungen 30 also in den Ausschnitten 116 der Eingriffsmittel 37 aufgenommen sind.

Umgekehrt bewirkt eine Bewegung der Zahnstangen 124 nach außen eine Verdrehung der Eingriffsmittel 37 in eine Eintauchlage, in welcher die unteren Teile der 118 der Eingriffsmittel 37 die Hinterschneidungen 30 freigeben, so dass die Eingriffsmittel 37 in die Längsnut 27 eingeführt oder aus dieser entnommen werden können.

Das Klemmen der Sicherungsvorrichtung 14 erfolgt ähnlich wie bei den voranstehenden Ausführungsformen durch ein Anziehen des Adapterelements 31 relativ zu dem das Adapterelement 31 umgebenden und auf der Nutumgebung 28 aufsitzenden Gehäuse 33 mittels der auf den oberen Gewindeabschnitt 42 des Gewindebolzens aufgeschraubten Mutter 44.

Alternativ ist es aber auch vorstellbar, die Klemmung des Adapterelements 31 an dem Ladeboden 12 durch den Vierkantstab 138 zu realisieren, indem der Vierkantstab 138 gleichzeitig mit der Verstellung der Eingriffsmittel 37 aus ihrer Eintauchlage in ihre Eingriffslage soweit nach unten aus dem Adapterelement 31 herausbewegt wird, dass er auf dem Mittelsteg 114 der W-förmigen Längsnut 27 aufsitzt und dadurch das Adapterelement 31 nach oben von dem Ladeboden 12 wegdrückt, sodass die Eingriffsmittel 37 kraft- und formschlüssig mit den Hinterschneidungen 30 der Längsnut 27 in Eingriff gebracht werden. Dieser Art der Klemmung hätte den Vorteil, dass der Klemmmechanismus 38 grundsätzlich ohne das Gehäuse 33 auskäme, wodurch auf das Gehäuse 33 verzichtet werden könnte.

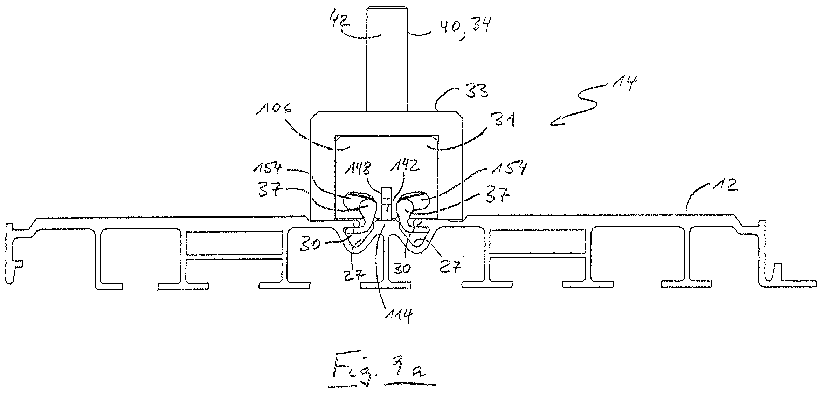

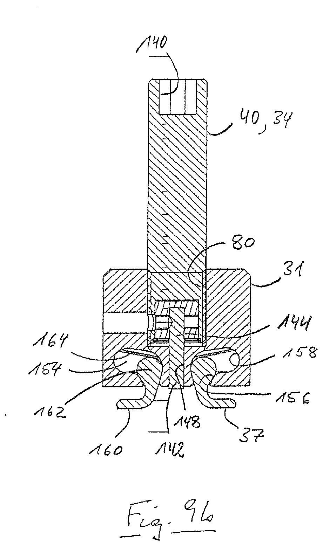

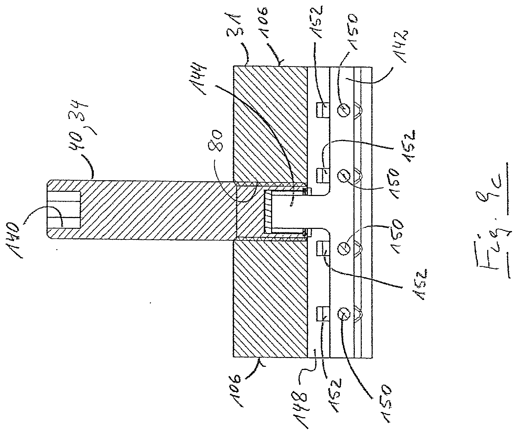

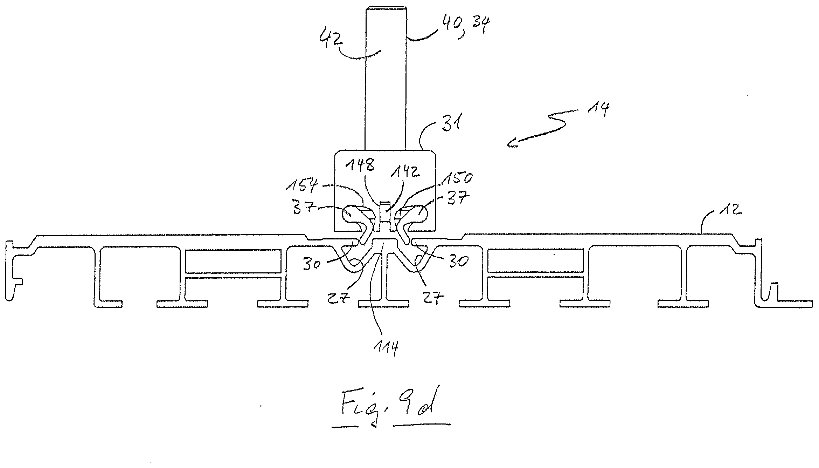

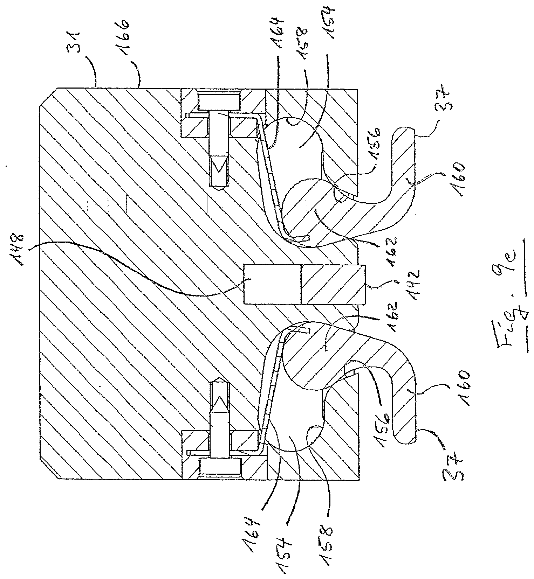

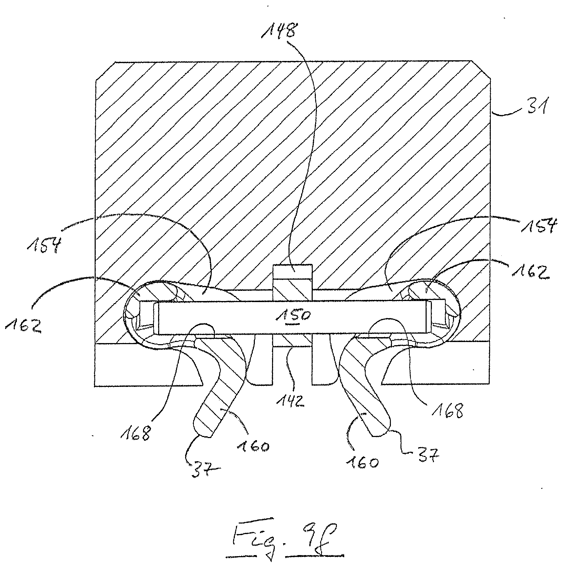

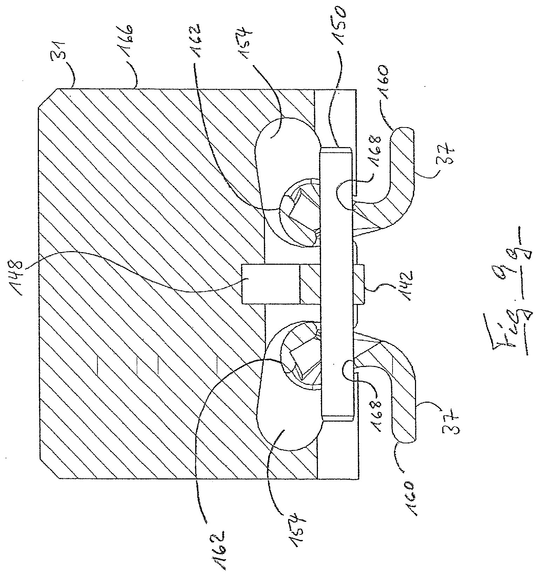

Fig. 9 zeigt noch eine weitere Ausführungsform einer Sicherungsvorrichtung 14, welche sich ähnlich wie die Ausführungsformen von Fig. 6 bis 8 unabhängig von einem Nutausschnitt der Längsnut 27 an einer beliebigen Stelle der Längsnut 27 in diese einsetzen lässt. Die Sicherungsvorrichtung 14 ist in Fig. 9 ohne Ladungssicherungsmittel dargestellt. Es versteht sich aber, dass die Sicherungsvorrichtung 14 von Fig. 9 ebenso wie die voranstehend beschriebenen Sicherungsvorrichtungen 14 mit einem Verankerungselement 22, einem Fixierelement 39 und/oder einem beliebigen anderen Ladungssicherungsmittel ausgerüstet sein kann.

Der Klemmmechanismus 38 der Sicherungsvorrichtung 14 von Fig. 9 ähnelt dem in Fig. 6 bis 8 dargestellten Klemmmechanismus 38 insofern, als er ein Adapterelement 31, das in einem U-profilartigen Gehäuse 33 aufgenommen ist, und ein Betätigungselement 34 in Form eines Gewindebolzens 40 umfasst, dessen unterer Abschnitt in eine Bohrung 80 des Adapterelements 31 eingeschraubt ist. Wie bei den vorherigen Ausführungsformen ist der zugängliche obere Abschnitt des Gewindebolzens 40 mit einem Gewinde 42 versehen, auf welches in bereits beschriebener Weise eine von Hand anziehbare Mutter 44, beispielsweise eine Knebelmutter, zur Betätigung des Klemmmechanismus 38 aufgeschraubt werden kann.

An seiner oberen Stirnseite ist der Gewindebolzen 40 mit einer Bitaufnahme 140 versehen (Fig. 9b). Im vorliegenden Ausführungsbeispiel ist die Bitaufnahme 140 zur Aufnahme eines Sechskantbits ausgebildet. Es versteht sich aber, dass die Bitaufnahme 140 auch an andere Bitformen, wie beispielsweise I-Stern- oder Torx-Bits angepasst sein kann. Durch Einsetzen eines entsprechenden Werkzeugs in die Bitaufnahme 140 lässt sich der Gewindebolzen 40 tiefer in das Adapterelement 31 hineinschrauben oder aus diesem herausdrehen, d.h. also relativ zu dem Adapterelement 31 nach unten oder nach oben verstellen.

Ein Führungsbalken 142 ist über einen vertikalen Fortsatz 144 verdrehbar mit dem unteren Ende des Gewindebolzens 40 verbunden. Der Führungsbalken 142 erstreckt sich quer zum Gewindebolzen 40 und somit im Wesentlichen parallel zur Unterseite des Adapterelements 31 von einer Stirnseite 106 des Adapterelements 31 zur anderen (Fig. 9c). Der Führungsbalken 142 ist in einer schlitzartigen Aussparung 148 des Adapterelements 31 geführt und wird durch eine Verstellung des Gewindebolzens 40 nach oben entsprechend nach oben bewegt bzw. durch eine Verstellung des Gewindebolzens 40 nach unten entsprechend nach unten bewegt.

Entlang des Führungsbalkens 142 sind mehrere Querbolzen 150 verteilt angeordnet, die sich sowohl zum Führungsbalken 142 als auch zum Gewindebolzen 40 quer erstrecken und in entsprechenden Queraussparungen 152 des Adapterelements 31 gelagert sind, sodass sie sich zusammen mit dem Führungsbalken 142 anheben oder absenken lassen.

Im unteren Teil des Adapterelements 31 sind zwei Kulissenführungen 154 ausgebildet, die sich auf gegenüberliegenden Seiten der Längsaussparung 148 parallel zu dieser von einer Stirnseite 106 des Adapterelements 31 zur anderen erstrecken (Fig. 9d und 9e). Die Kulissenführungen 154 weisen jeweils einen zur Unterseite des Adapterelements 31 hin offenen Aktivabschnitt 156 sowie einen nach außen und leicht schräg oben weisenden Passivabschnitt 158 auf.

In jeder Kulissenführung 154 ist ein Eingriffsmittel 37 beweglich gelagert, welches sich bei der hier dargestellten Ausführungsform von einer Stirnseite 106 des Adapterelements 31 zur anderen erstreckt. Im Querschnitt gesehen bildet jedes Eingriffsmittel 37 einen etwa rechtwinkligen Haken mit einem aus der Kulissenführung 154 herausragenden, in die Längsnut 27 einführbaren und mit der Hinterschneidung 30 in Eingriff bringbaren Eingriffsschenkel 160 und mit einem sich daran anschließenden, in der Kulissenführung 154 geführten Führungsschenkel 162. Damit die Eingriffsmittel 37 nicht aus ihren Kulissenführungen 154 herausfallen können, sind die Führungsschenkel 162 im Vergleich zu den Eingriffsschenkein 160 verstärkt ausgebildet, sodass sie eine maximale Breite aufweisen, die größer als eine minimale Weite der Aktivabschnitte 156 der Kulissenführungen 154 ist.

Die Konturen der Kulissenführungen 154 und der Eingriffsmittel 37 sind derart aneinander angepasst, dass, wenn die Führungsschenkel 162 der Eingriffsmittel 37 vollständig in den Kulissenführungen 154 aufgenommen sind, noch aus dem Adapterelement 31 hervorstehende Endabschnitte der Eingriffsschenkel 160 in die Längsnut 27 eintauchen können (Fig. 9d), und dass, wenn die Eingriffsmittel 37 aus den Kulissenführungen 154 heraus bewegt werden, die Eingriffsmittel 37 eine Drehbewegung vollführen und die Eingriffsschenkel 160 die Hinterschneidungen 30 hintergreifen. In einer Endlage der Eingriffsmittel 37, in welcher die Führungsschenkel 152 in den Aktivabschnitten 156 der Kulissenführungen 154 gelagert sind, erstrecken sich die Eingriffsschenkel 160 idealerweise im Wesentlichen horizontal, sodass sie mit den Hinterschneidungen 30 der Längsnut 27 in optimaler Weise zusammenwirken können (Fig. 9a).

Die Bewegung der Eingriffsmittel 37 aus ihrer Eintauchlage in ihre Eingriffslage erfolgt jeweils entgegen der Rückstellkraft eines Federelements 164, dessen äußeres Ende an einer Außenseite 166 des Adapterelements 31 fixiert ist und dessen inneres Ende dezentral an dem verstärkten Endabschnitt des Führungsschenkels 162 des Eingriffsmittels 37 angebracht ist (Fig. 9e). Die dezentrale Befestigung der Federelemente 164 an den Eingriffsmitteln 37 unterstützt die Drehung der Eingriffsmittel 37 aus ihrer Eingriffslage in ihre Eintauchlage und somit eine Bewegung der Eingriffsmittel 37 in die Kulissenführungen 154 hinein.

Die Verstellung der Eingriffsmittel 37 aus ihrer Eintauchlage in ihre Eingriffslage und umgekehrt erfolgt durch eine Verdrehung des Gewindebolzens 40 relativ zu dem Adapterelement 31, d.h. also durch eine Verstellung des Gewindebolzens 40 nach oben oder unten. Die Kopplung der Eingriffsmittel 37 mit den Gewindebolzen 40 erfolgt über die in dem Führungsbalken 142 gelagerten Querbolzen 150, die sich durch entsprechende Querbohrungen 168 der Eingriffsmittel 37 hindurch erstrecken (Fig. 9f). Bei einer Verstellung des Gewindebolzens 40 nach unten, d.h. also Verdrehung in das Adapterelement 31 hinein, werden die Eingriffsmittel 37 über den Führungsbalken 142 und die Querbolzen 150 also nach unten aus den Kulissenführungen 154 herausgedrückt, d.h. also aus ihrer Eintauchlage in ihre Eingriffslage gebracht (Fig. 9g). Umgekehrt werden die Eingriffsmittel 37 wieder in die Kulissenführungen 154 hineingezogen, d.h. aus ihrer Eingriffslage in ihre Eintauchlage gebracht, wenn der Gewindebolzen 40 und somit der Führungsbalken 142 und die Querbolzen 150 nach oben bewegt werden. Dabei versteht es sich, dass die Querbohrungen 168 so ausgebildet sind, dass sie eine Verdrehung der Eingriffsmittel 37 relativ zu den Querbolzen 150 und somit aus der Eintauchlage in die Eingriffslage und umgekehrt erlauben.

Das Klemmen der Sicherungsvorrichtung 14 an den Ladenboden 12 erfolgt ähnlich wie bei den voranstehenden Ausführungsformen durch ein Anziehen des Adapterelements 31 relativ zu einem das Adapterelement 31 teilweise umgebenden und auf der Nutumgebung 28 aufsitzenden U-profilförmigen Gehäuse 33 mittels einer auf den oberen Gewindeabschnitt 42 des Gewindebolzens aufgeschraubten Mutter 44.

Alternativ ist es aber auch vorstellbar, die Klemmung des Adapterelements 31 an dem Ladeboden 12 durch den Führungsbalken 142 zu realisieren, indem der Führungsbalken 142 gleichzeitig mit der Verstellung der Eingriffsmittel 37 aus ihrer Eintauchlage in ihre Eingriffslage soweit nach unten aus dem Adapterelement 31 herausbewegt wird, dass er auf einem Mittelsteg 114 der Längsnut 27 aufsitzt und dadurch das Adapterelement 31 nach oben von dem Ladeboden 12 wegdrückt und somit die Eingriffsmittel 37 kraft- und raumschlüssig mit den Hinterschneidungen 30 der Längsnut 27 in Eingriff bringt. Dieser Art der Klemmung hätte wiederum den Vorteil, dass der Klemmmechanismus 38 grundsätzlich ohne das Gehäuse 33 auskäme, wodurch auf das Gehäuse 33 verzichtet werden könnte.

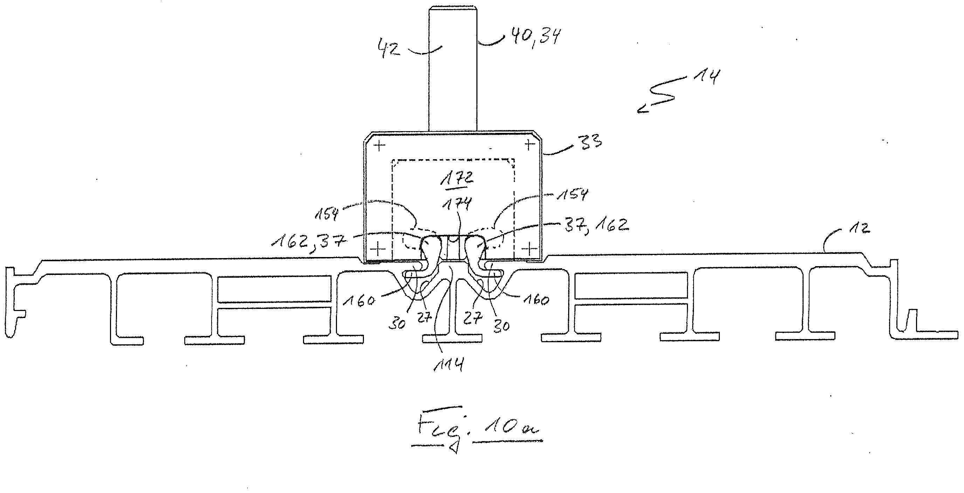

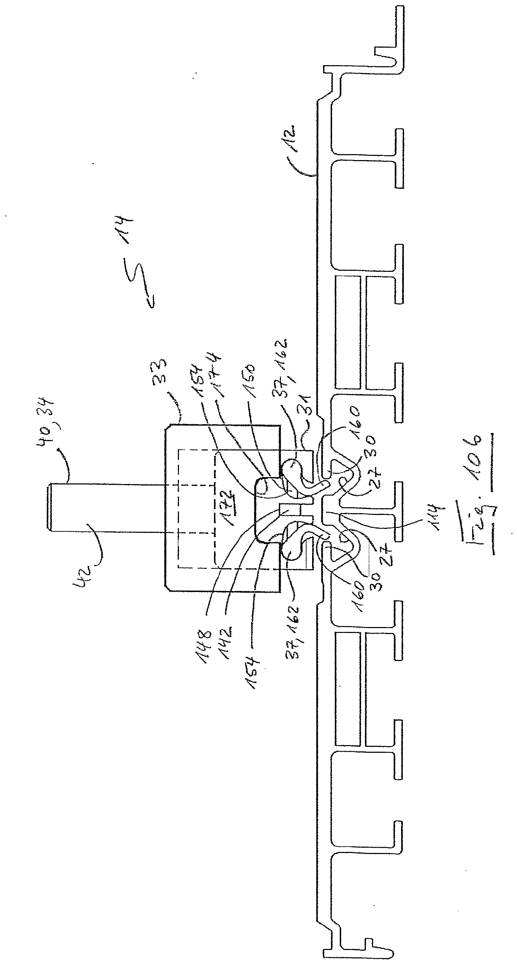

In Fig. 10 ist eine Variante der Sicherungsvorrichtung 14 von Fig. 9 mit einem Gehäuse 33 dargestellt, welches einen Mechanismus zur Sicherung der Eingriffsmittel 37 in ihrer Eingriffslage bildet. Der Sicherungsmechanismus setzt zum einen voraus, dass die Eingriffsmittel 37 um eine gewisse Distanz über die Stirnseiten 106 des Adapterelements 31 hervorstehen, und umfasst zum anderen stirnseitige Wände 172 des Gehäuses 33, die an ihren zu der Längsnut 27 weisenden unteren Rändern jeweils eine Verriegelungsaussparung 174 aufweisen. Die Verriegelungsaussparungen 174 nehmen die über die Stirnseiten 106 des Adapterelements 31 jeweils hervorstehenden Enden der Führungsschenkel 162 der Eingriffsmittel 37 im geklemmten Zustand der Sicherungsvorrichtung 14 passgenau auf und verhindern, dass sich die Eingriffsmittel 37 unbeabsichtigt in ihre Eintauchlage bewegen können (Fig. 10a).

Zum Eintauchen der Eingriffsmittel 37 in die Längsnut 27 bzw. umgekehrt zum Lösen der Eingriffsmittel 37 aus der Längsnut 27 braucht das Gehäuse 33 unter Lösung der Mutter 44 lediglich so weit von dem Adapterelement 31 abgehoben werden, das die Verriegelungsaussparungen 174 der stirnseitigen Wände 172 die Eingriffsmittel 37 freigeben, sodass die Eingriffsmittel 37 ihre Eintauchlage einnehmen können (Fig. 10b).

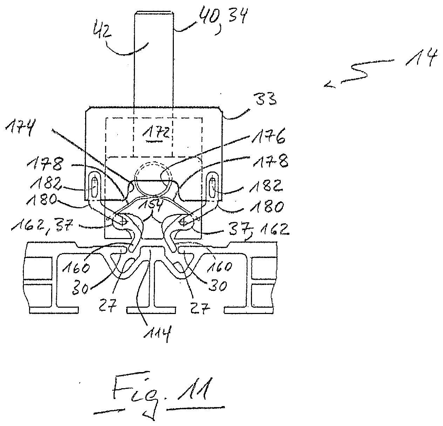

In Fig. 11 ist eine Variante der Sicherungsvorrichtung 14 von Fig. 9 dargestellt, welche ohne Führungsbalken 142 und Querbolzen 150 auskommt, weshalb der Gewindebolzen 40 bei dieser Variante fest in dem Adapterelement 31 verankert sein kann.

Wie bei der Ausführungsform von Fig. 9 sind bei der Variante von Fig. 11 zwei winklige Eingriffsmittel 37 in entsprechenden Kulissenführungen 154 beweglich gelagert. Ähnlich wie der Variante von Fig. 10 stehen auch bei der Variante von Fig. 11 die Eingriffsmittel 37 um eine gewisse Distanz über die Stirnseiten 106 des Adapterelements 31 hervor. Außerdem ist das U-profilförmige Gehäuse 33 ähnlich wie bei der Variante von Fig. 10 stirnseitig durch Wände 172 verschlossen, welche an ihrem unteren Rand jeweils eine Verriegelungsaussparung 174 zur Sicherung der Eingriffsmittel 37 in deren Eingriffslage aufweisen.

Bei der in Fig. 11 gezeigten Variante sind das Adapterelement 31 und das Gehäuse 33 so dimensioniert, dass zwischen den Stirnseiten 106 des Adapterelements 31 und den stirnseitigen Wänden 172 des Gehäuses 33 Zwischenräume ausgebildet sind, in denen eine Schenkelfeder 176 untergebracht ist, welche mit ihren Schenkeln 178 auf die über die Stirnseiten 106 hervorstehenden Enden der Führungsschenkel 162 drückt und die Eingriffsmittel 37 dadurch in ihre Eingriffslage vorspannt.

Die Steuerung der Bewegung der Eingriffsmittel 37 aus ihrer Eintauchlage in ihre Eingriffslage und umgekehrt erfolgt bei dieser Variante mittels abgewinkelter Mitnehmer 180, die jeweils im Bereichs ihres einen Endes drehbar an der Stirnseite des verstärkten Abschnitts des Führungsschenkels 162 eines der Eingriffsmittel 37 und im Bereich ihres anderen Endes ein Langloch 182 aufweisen, über das sie verdrehbar und verschiebbar an einer Außenseite des Gehäuses 33, insbesondere an einer der stirnseitigen Wände 172, gelagert sind.

Durch Anheben des Gehäuses 33 relativ zu dem Adapter 31 in die in Fig. 11 gezeigte Stellung, werden die Eingriffsmittel 37 durch die Mitnehmen 180 entgegen einer Rückstellkraft der Schenkelfeder 176 in ihre Eintauchlage gezogen. In diesem Zustand kann die Sicherungsvorrichtung 14 aus der Längsnut 27 gelöst oder in diese eingetaucht werden. Zur Klemmung der Sicherungsvorrichtung 14 an dem Lageboden 12 wird die Sicherungsvorrichtung 14 mit angehobenem Gehäuse 33 so über der Längsnut 27 platziert, dass die freien Enden der Eingriffsschenkel 160 der Eingriffsmittel 37 in die Längsnut 27 eintauchen können. Anschließend wird das Gehäuse 33 nach unten gedrückt, wodurch die Eingriffsmittel 37 über die Mitnehmer 180 entlang den Kulissenführungen 154 verschoben und dabei verdreht werden, bis die Eingriffsmittel 37 bei vollständig heruntergedrücktem Gehäuse 33 ihre Eingriffslage eingenommen haben, in welcher sie die Hinterschneidungen 30 hintergreifen und in welcher sie gleichzeitig durch die Verriegelungsaussparungen 174 in den stirnseitigen Wänden 172 des Gehäuses 33 gesichert sind.

Zur Erzeugung der gewünschten Klemmkraft braucht nun nur noch das Adapterelement 31 relativ zu dem Gehäuse 33 angezogen werden, zum Beispiel in der bereits beschriebenen Weise mittels einer auf einen oberen Gewindeabschnitt 42 des Gewindebolzens 40 aufgeschraubten und sich an der Oberseite des Gehäuses 33 abstützenden Mutter 44.

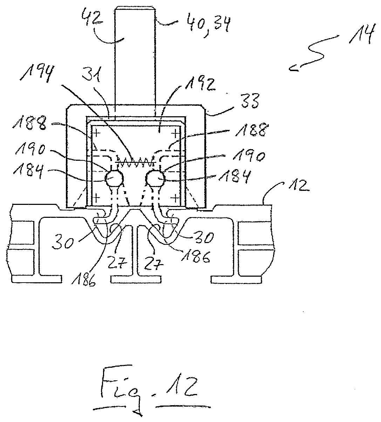

Fig. 12 zeigt noch eine weitere Ausführungsform einer Sicherungsvorrichtung 14, welche sich unabhängig von einem Nutausschnitt der Längsnut 27 an einer beliebigen Stelle der Längsnut 27 in diese einsetzen lässt. Die Sicherungsvorrichtung 14 ist in Fig. 12 ohne Ladungssicherungsmittel dargestellt. Es versteht sich aber, dass die Sicherungsvorrichtung 14 von Fig. 12 ebenso wie die voranstehend beschriebenen Sicherungsvorrichtungen 14 mit einem Verankerungselement 22, einem Fixierelement 39 und/oder einem beliebigen anderen Ladungssicherungsmittel ausgerüstet sein kann.

Der Klemmmechanismus 38 der Sicherungsvorrichtung 14 von Fig. 12 ähnelt dem in Fig. 6 und 7 dargestellten Klemmmechanismus 38 insofern, als er ein Adapterelement 31, das in einem U-profilartigen Gehäuse 33 aufgenommen ist, und ein Betätigungselement 34 in Form eines Gewindebolzens 40 umfasst, dessen zugänglicher oberer Abschnitt mit einem Gewinde 42 versehen ist und dessen unterer Abschnitt in einer Bohrung 80 des Adapterelements 31 sitzt und hierin mit dem Adapterelement 31 fest verbunden ist, z.B. verschraubt, verbolzt, verklebt oder verschweißt ist. Die Betätigung des Betätigungselements 34 erfolgt mittels einer nicht gezeigten, von Hand anziehbaren Mutter 44, z.B. einer Knebelmutter, die mit dem Gewinde 42 des Gewindebolzens 40 in Eingriff steht.

Die Sicherungsvorrichtung 14 von Fig. 12 weist zwei in dem Adapterelement 31 gelagerte und zwischen einer Eintauchlage und einer Eingriffslage verschwenkbare Eingriffsmittel 37 auf. Jedes Eingriffsmittel 37 umfasst einen rundstangenförmigen Tragabschnitt 184, von dem aus sich nach unten in Richtung der Längsnut 27 ein etwa rechtwinklig nach außen abgewinkelter und aus dem Adapterelement 31 hervorragender Hakenabschnitt 186 erstreckt. Außerdem erstreckt sich ein Gegenabschnitt 188 entgegengesetzt zu dem Hakenabschnitt 186 nach oben von dem Tragabschnitt 184 weg, welcher ebenfalls im Wesentlichen rechtwinklig nach außen abgewinkelt ist.

Die stirnseitigen Enden der Tragabschnitte 184 stehen um eine gewisse Distanz über die Stirnseiten 106 des Adapterelements 31 hervor und sind in Lagerbohrungen 190 verdrehbar gelagert, welche in Stirnplatten 192 vorgesehen sind, die auf die Stirnseiten des Adapterelements 31 aufgebracht, z.B. aufgeschraubt, sind.

Es versteht sich, dass in dem Adapterelement 31 entsprechende Aussparungen für die Tragabschnitte 184, Hakenabschnitte 186 und die Gegenabschnitt 188 vorgesehen sein müssen, die eine Verschwenkung der Eingriffsmittel 37 ermöglichen.

Ferner ist ein Federelement 194, im vorliegenden Ausführungsbeispiel eine Schraubendruckfeder, in einer entsprechenden Aussparung des Adapterelements 31 angeordnet, welches mit den Gegenabschnitten 188 der Eingriffsmittel 37 zusammenwirkt und die Gegenabschnitte 188 auseinander, d.h. jeweils nach außen, drückt und somit die Eingriffsmittel 37 in ihre Eintauchlage drängt, in welcher sie in die Längsnut 27 eingeführt werden können.

Fig. 12 zeigt die Eingriffsmittel 37 in ihrer Eingriffslage, in welcher die Hakenabschnitte 186 die Hinterschneidungen 30 hintergreifen und die Gegenabschnitte 188 das Federelement 194 komprimieren. Die nach außen abgewinkelten Teilabschnitte der Gegenabschnitte 188 stützen sich hierbei an der Innenseite des Gehäuses 33 ab und verhindern so, dass die Eingriffsmittel 37 in ihre Eintauchlage zurückschwenken können.

Zum Lösen der Sicherungsvorrichtung 14 aus der Längsnut 27 braucht lediglich das Gehäuse 33 soweit relativ zu dem Adapterelement 31 angehoben zu werden, dass die Gegenabschnitte 188 freigegeben und durch die Rückstellkraft des Federelements 194 nach außen geschwenkt werden, was mit einer Verschwenkung der Hakenabschnitte 186 nach innen einhergeht, wodurch auch die Hinterschneidungen 30 freigegeben werden.

Umgekehrt wird die Sicherungsvorrichtung 14 zur Montage an dem Ladeboden 12 mit angehobenem Gehäuse 33, d.h. mit in Eintauchlage befindlichen Eingriffsmitteln 37, auf die Längsnut 27 aufgesetzt und das Gehäuse 33 nach unten gedrückt. In einem unteren Bereich seiner Innenseiten ist das Gehäuse 33 mit Abschrägungen 196 versehen, auf welche die seitlich aus dem Adapterelement 31 hervorstehenden abgewinkelten Teilabschnitte der Gegenabschnitte 188 auflaufen, wenn sich das Gehäuse 33 nach unten bewegt, wodurch die Gegenabschnitte 188 entgegen der Rückstellkraft des Federelements 194 nach innen gedrückt und die Eingriffsmittel 37 so in ihre Eingriffslage gebracht werden.

Wie in Fig. 12 zu erkennen ist weist die W-förmige Längsnut für diese Ausführungsform der Sicherungsvorrichtung 14 vorteilhafterweise eine gegenüber den vorherigen Beispielen etwas abgewandelte Form auf. So sind die Hinterschneidungen 30 hier etwas kürzer und die Nutöffnungen etwas weiter ausgebildet, um eine ausreichende Schwenkbewegung der Hakenabschnitte 186 zu ermöglichen.

Das Klemmen der Sicherungsvorrichtung 14 erfolgt ähnlich wie bei den voranstehenden Ausführungsformen durch ein Anziehen des Adapterelements 31 relativ zu dem auf der Nutumgebung 28 aufsitzenden Gehäuse 33 mittels der auf den oberen Gewindeabschnitt 42 des Gewindebolzens 40 aufgeschraubten Mutter 44.

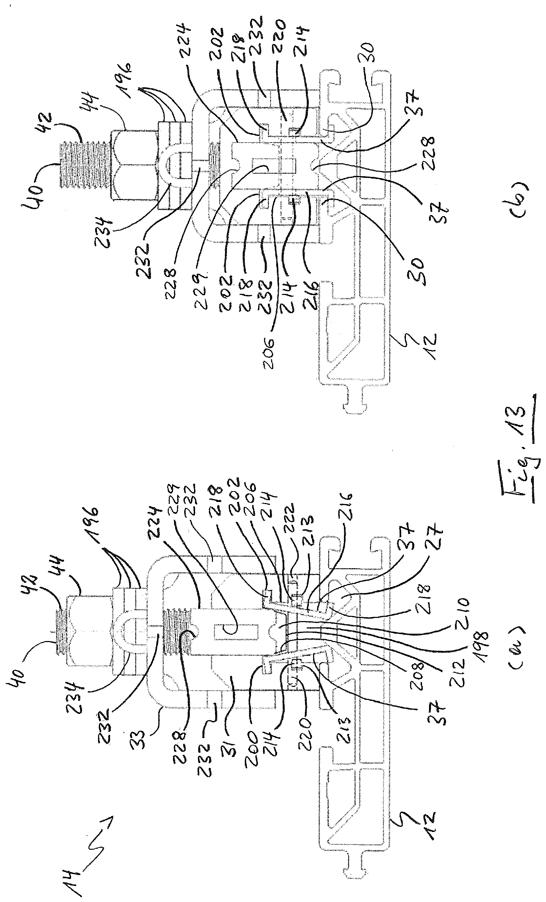

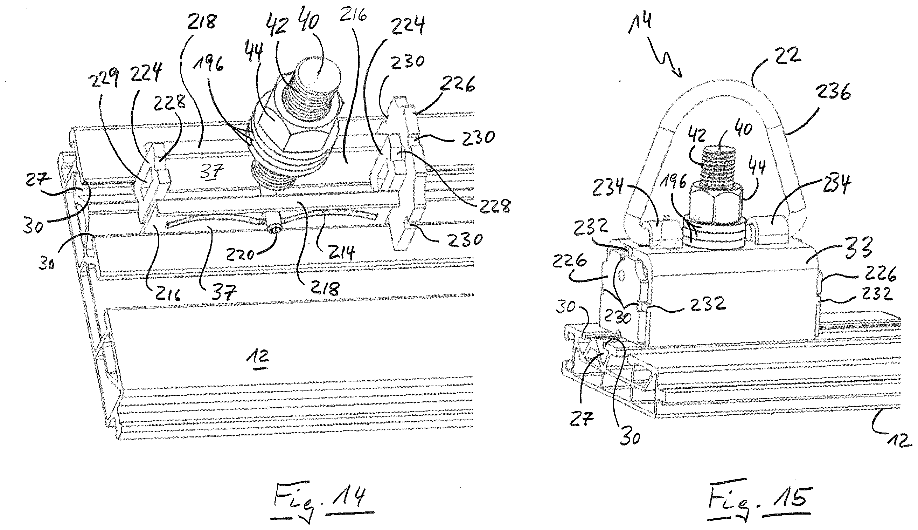

Fig. 13 bis 15 zeigen noch eine weitere Ausführungsform einer Sicherungsvorrichtung 14, welche sich unabhängig von einem Nutausschnitt der Längsnut 27 an einer beliebigen Stelle der Längsnut 27 in diese einsetzen lässt.

Auch der Klemmmechanismus 38 der Sicherungsvorrichtung 14 von Fig. 13 umfasst ähnlich wie die Klemmmechanismen 38 der Sicherungsvorrichtungen 14 von Fig. 6, 7 und 12 ein U-profilartiges Gehäuse 33, das von oben auf ein Adapterelement 31 geschoben bzw. nach oben von diesem abgehoben werden kann. Ein Gewindebolzen 40 steht nach oben von dem Adapterelement 31 ab. Ein unterer Abschnitt des Gewindebolzens 40 sitzt in einer Bohrung des Adapterelements 31 und ist hierin mit dem Adapterelement 31 fest verbunden, z.B. verschraubt, verbolzt, verklebt oder verschweißt. Ein oberer Abschnitt des Gewindebolzens 40 erstreckt sich durch eine Bohrung in der Basis des U-profilartigen Gehäuses 33 und ist von außen zugänglich. Der obere Abschnitt des Gewindebolzens 40 ist mit einem Gewinde 42 versehen, auf welches eine Mutter 44 aufgeschraubt ist. Im dargestellten Ausführungsbeispiel handelt es sich bei der Mutter 44 um eine Sechskantmutter, alternativ kommt aber auch eine von Hand anziehbare Mutter in Betracht, wie z.B. eine Knebelmutter. Zwischen der Mutter 44 und dem Gehäuse 33 sind mehrere Distanzringe 196 angeordnet.

Das Adapterelement 31 weist einen senkrecht zur Längsmittelachse des Gewindebolzens 40 und in Richtung der Längsnut 27 verlaufenden Kanal 198 auf, welcher sich etwa mittig von einer ersten Stirnseite 86 des Adapterelements 31 bis zu einer gegenüberliegenden zweiten Stirnseite erstreckt und nach unten, d.h. zur Längsnut 27 hin offen ist, wodurch dem Adapterelement 31 ähnlich wie dem Gehäuse 33 die Gestalt eines auf dem Kopf stehenden U verliehen wird. Die Breite des Kanals 198 entspricht im Wesentlichen dem Abstand zwischen den Hinterschneidungen 30 der Längsnut 27.

Der Kanal 198 geht an seiner oberen, d.h. von der Längsnut 27 wegweisenden Seite in zwei Nuten 200 über, die jeweils etwa die Form eines auf dem Kopf stehenden L besitzen, wobei Horizontalabschnitte 202 der Nuten 200 voneinander weg, d.h. also jeweils nach außen weisen. Vertikalabschnitte 204 der Nuten 200 sind außenseitig jeweils durch parallel zur Längsmittelachse des Gewindebolzens 40 verlaufende Vertikalflanken 206 und innenseitig jeweils durch schräg verlaufende Schrägflanken 208 des Adapterelements 31 begrenzt. Konkret sind die Schrägflanken 208 durch einen Vorsprung 210 definiert, welcher von oben in den Kanal 198 hineinragt und sich nach unten hin verjüngt, wobei eine Unterseite 212 des Vorsprungs 210 plan ausgebildet ist, wodurch der Vorsprung einen trapezförmigen Querschnitt erhält.

In die Vertikalflanken 206 sind auf etwa halber Höhe seitliche Längsnuten 213 eingebracht, in welchen Federelemente, im vorliegenden Ausführungsbeispiel Blattfedern 214 aufgenommen sind, die sich über einen Großteil der Länge des Kanals 198 erstrecken. Die Blattfedern 214 ragen im entspannten Zustand zumindest bereichsweise in den Kanal 198 hinein und können entgegen einer Rückstellkraft in die seitlichen Längsnuten 213 hineingedrückt werden.

In dem Adapterelement 31 sind ferner zwei zwischen einer Eintauchlage und einer Eingriffslage verschwenkbare Eingriffsmittel 37 gelagert. Die Eingriffsmittel 37 sind als C-förmige Profile ausgebildet und umfassen jeweils einen in Richtung des Kanals 198 verlaufenden Basisabschnitt 216 und daran angrenzende, nach außen weisende Schenkelabschnitte 218. Die Länge der Eingriffsmittel 37 ist größer als die Länge des Kanals 198 gewählt, so dass Endabschnitte der Eingriffsmittel 37 über die Stirnseiten des Adapterelements 31 hervorstehen.

Die Eingriffsmittel 37 sind derart in den Kanal 198 eingesetzt, z.B. eingeschoben, dass ihre oberen Abschnitte in den Nuten 200 aufgenommen sind, während ihre unteren Abschnitte nach unten aus dem Adapterelement herausragen, um in die Längsnut 27 einzutauchen und die Hinterschneidungen 30 hintergreifen zu können.

Die Nuten 200 sind so großzügig dimensioniert, dass die Eingriffsmittel 37 ausreichen Spiel haben, um in diesen zwischen ihrer Eintauchlage (Fig. 13a) und ihrer Eingriffslage (Fig. 13b) verschwenken zu können. Dabei stehen die Basisabschnitte 216 der Eingriffsmittel 37 mit den Blattfedern 214 in Kontakt, so dass die Verschwenkung aus der Eintauchlage in die Eingriffslage entgegen der Rückstellkraft der Blattfedern 214 erfolgt.

Zur Sicherung der Blattfedern 214 und der Eingriffsmittel 37 gegen Längsverschiebung innerhalb des Kanals 198 ist ein Sicherungsstift 220 vorgesehen, der in Querbohrungen 222 des Adapterelements 31 aufgenommen ist und sich unterhalb des Vorsprungs 210 quer durch den Kanal 198 und die Eingriffsmittel 37 erstreckt. Es versteht sich, dass hierzu Bohrungen in den Basisabschnitten 216 der Eingriffsmittel 37 vorgesehen sein müssen, z.B. Langlöcher, die ausreichend groß dimensioniert sind, um die Verschwenkung der Eingriffsmittel 37 nicht zu behindern. Zur Fixierung der Blattfedern 214 sind im vorliegenden Ausführungsbeispiel halbmondförmige Vertiefungen in den Blattfedern 214 vorgesehen, in denen der Sicherungsstift 220 aufgenommen ist. Alternativ ist es aber auch denkbar, dass in den Blattfedern 214 Bohrungen vorgesehen sind, durch welche sich der Sicherungsstift 220 hindurch erstreckt.

Wie bereits erwähnt werden die Eingriffsmittel 37 durch die Blattfedern 214 in ihre Eintauchlage gedrängt (Fig. 13a). Um die Eingriffsmittel 37 in ihre Eingriffslage zu bringen (Fig. 13b), müssen die Eingriffsmittel 37 an ihrem unteren Ende nach außen verschwenkt, d.h. auseinander gedrückt werden.

Hierzu sind im Wesentlichen rechteckige Betätigungsplatten 224 vorgesehen, die an den Innenseiten von Abdeckungen 226 angebracht, z.B. angeschweißt sind, welche die offenen Stirnseiten des U-förmigen Gehäuses 33 verschließen. Die Positionierung und die Abmessungen, insbesondere die Breite, der Betätigungsplatten 224 sind so an die Eingriffsmittel 37 angepasst, dass die Betätigungsplatten 224 beim Herunterdrücken oder -fallen des Gehäuses 33 auf das Adapterelement 31 zwischen die über das Adapterelement 31 hervorstehenden Endabschnitte der Eingriffsmittel 37 einfahren und diese auseinander drücken und schließlich in deren Eingriffslage halten (Fig. 13b), in welcher die unteren Schenkelabschnitte 218 der Eingriffsmittel 37 die Hinterschneidungen 20 hintergreifen.

Zum Lösen der Sicherungsvorrichtung 14 aus der Längsnut 27 braucht lediglich das Gehäuse 33 soweit relativ zu dem Adapterelement 31 angehoben zu werden, dass die Eingriffsmittel 37, von den Betätigungsplatten 224 freigegeben, durch die Rückstellkraft der Blattfedern 214 wieder nach innen geschwenkt werden, wodurch auch die Hinterschneidungen 30 freigegeben werden.

Zur korrekten Positionierung der Betätigungsplatten 224 an den Abdeckungen 226 sind an den Ober- und Unterseiten der Betätigungsplatten 224 halbmondförmige Positioniernuten 228 ausgebildet, die mit entsprechenden Positioniervorsprüngen der Abdeckungen 226 zusammenwirken. Außerdem weisen die Betätigungsplatten 224 zentrale rechteckige Langlöcher 229 auf, die das Verschweißen der Betätigungsplatten 224 mit den Abdeckungen 226 erleichtern.

Zur korrekten Positionierung der Abdeckungen 226 an dem Gehäuse 33 weisen die Abdeckungen 226 an ihren Außenseiten mehrere Positioniernuten 230 auf, in welche Positioniernasen 232 des Gehäuses 33 eingreifen. Die Abdeckungen 226 sind bevorzugt mit dem Gehäuse 33 verschweißt. Grundsätzlich ist es aber auch denkbar, die Abdeckungen 226 lösbar mit dem Gehäuse 33 zu verbinden, z.B. an das Gehäuse 33 anzuschrauben.

Das Klemmen der Sicherungsvorrichtung 14 erfolgt ähnlich wie bei den voranstehenden Ausführungsformen durch ein Anziehen des Adapterelements 31 relativ zu dem auf der Nutumgebung 28 aufsitzenden Gehäuse 33 mittels der auf den oberen Gewindeabschnitt 42 des Gewindebolzens 40 aufgeschraubten Mutter 44.

Gemäß dem in Fig. 13 bis 15 dargestellten Ausführungsbeispiel sind an der Oberseite des Gehäuses 33 zwei Lagerbügel 234 zur Lagerung eines Verankerungselements 22, hier eines Verankerungsbügels 236, angebracht. Um die Betätigung der Mutter 44 nicht zu behindern, sind zum Ausgleich der Höhe der Lagerbügel 234 die Distanzringe 196 zwischen der Mutter 44 und dem Gehäuse 33 angeordnet. Es versteht sich, dass ein so gelagerter Verankerungsbügel 236 auch bei jeder der voranstehend beschriebenen Ausführungsformen vorgesehen sein kann. Umgekehrt ist es möglich, die Sicherungsvorrichtung 14 von Fig. 13 bis 15 ganz ohne Ladungssicherungsmittel, mit einem Verankerungselement 22 nach Art von Fig. 2 oder 7, mit einem Fixierelement 39 und/oder einem beliebigen anderen Ladungssicherungsmittel auszurüsten.

### Bezugszeichenliste

- 10: Papierrolle
- 12: Ladeboden
- 14: Sicherungsvorrichtung
- 16: Radsicherungskeil
- 18: Zurrgurt
- 20: Zurrhaken
- 22: Verankerungselement
- 24: Öse
- 26: Buchse
- 27: Längsnut
- 28: Nutumgebung
- 29: Nutboden
- 30: Hinterschneidung
- 31: Adapterelement
- 32: Gewindebohrung
- 33: Gehäuse
- 34: Betätigungselement
- 35: Schraube
- 36: Schraubenkopf
- 37: Eingriffsmittel
- 38: Klemmmechanismus
- 39: Fixierelement
- 40: Gewindebolzen
- 42: Gewinde
- 44: Mutter
- 46: Plattenabschnitt
- 48: Aussparung
- 50: Plattenabschnitt
- 52: Fingerabschnitt
- 54: Rückseite
- 56: Aussparung
- 58: Seitenfläche
- 60: Blechabschnitt
- 62: Blechabschnitt
- 72: Horizontalabschnitt
- 74: Bohrung
- 76: Blechabschnitt
- 78: Schenkelabschnitt
- 79: Mantelfläche
- 80: Bohrung
- 82: C-Profil
- 84: Adapternut
- 86: Stirnseite
- 88: Bohrung
- 90: Außenseite
- 92: Aussparung
- 94: Längsbohrung
- 95: Lagerbohrung
- 96: Querbohrung
- 98: Schraubendruckfeder
- 100: Gehäuseöffnung
- 102: Fase
- 104: Vertiefung
- 106: Stirnseite
- 108: Abschlussplatte
- 110: Fortsatz
- 112: Aussparung
- 114: Mittelsteg
- 116: Ausschnitt
- 118: unterer Teil
- 122: Zahnung
- 124: Zahnstange
- 126: Bohrung
- 128: äußeres Ende
- 130: Federelement
- 132: inneres Ende
- 134: Nockenelement
- 136: Aussparung
- 138: Vierkantstab
- 140: Bitaufnahme
- 142: Führungsbalken
- 144: Fortsatz
- 148: Längsaussparung
- 150: Querbolzen
- 152: Queraussparung
- 154: Kulissenführung
- 156: Aktivabschnitt
- 158: Passivabschnitt
- 160: Eingriffsschenkel
- 162: Führungsschenkel
- 164: Federelement
- 166: Außenseite
- 168: Querbohrung
- 172: Stirnseitige Wand
- 174: Verriegelungsaussparung
- 176: Schenkelfeder
- 178: Schenkel
- 180: Mitnehmer
- 182: Langloch
- 184: Tragabschnitt
- 186: Hakenabschnitt
- 188: Gegenabschnitt
- 190: Lagerbohrung
- 192: Stirnplatte
- 194: Federelement
- 196: Distanzring
- 198: Kanal
- 200: Nut
- 202: Horizontalabschnitt
- 204: Vertikalabschnitt
- 206: Vertikalflanke
- 208: Schrägflanke
- 210: Vorsprung
- 212: Unterseite
- 213: Längsnut
- 214: Blattfeder
- 216: Basisabschnitt
- 218: Schenkelabschnitt
- 220: Sicherungsstift
- 222: Querbohrung
- 224: Betätigungsplatte
- 226: Abdeckung
- 228: Positioniernut
- 229: Langloch
- 230: Positioniernut
- 232: Positioniernase
- 234: Lagerbügel
- 236: Verankerungsbügel

## Patentansprüche

1. Vorrichtung (14) zur Sicherung von Ladegut (10) an einem Ladeboden (12), welcher wenigstens eine Längsnut (27) mit mindestens einer Hinterschneidung (30) aufweist, mit einem Klemmmechanismus (38), welcher ein Adapterelement (31) mit zwei in die Längsnut (27) einführbaren Eingriffsmittel (37) und ein Betätigungselement (34) umfasst, durch welches die Eingriffsmittel (37) des Adapterelements (31) kraft- und formschlüssig mit der Hinterschneidung (30) der Längsnut (27) in Eingriff bringbar sind,
wobei die Eingriffsmittel (37) beweglich in oder an dem Adapterelement (31) gelagert und durch eine Verdrehung, Verschwenkung und/oder Verschiebung aus einer Eintauchlage, in welcher sie in die Längsnut (27) eintauchbar sind, in eine Eingriffslage bringbar sind, in welcher sie die Hinterschneidung (30) der Längsnut (27) hintergreifen,
**dadurch gekennzeichnet, dass**
die Eingriffsmittel (37) durch eine Bewegung eines das Adapterelement (31) zumindest teilweise umgebenden Gehäuses (33) relativ zu dem Adapterelement (31) aus der Eintauchlage in die Eingriffslage bringbar sind,
wobei das Gehäuse (33) derart ausgebildet ist, dass es sich an einer Nutumgebung (28) der Längsnut (27) abstützen und den Ladeboden (12) zwischen den Eingriffsmitteln (37) und dem Gehäuse (33) klemmen kann und somit die Sicherungsvorrichtung (14)am Ladeboden (12) fixiert.

2. Vorrichtung (14) nach Anspruch 1,
**dadurch gekennzeichnet, dass**
ein Federelement (98; 164; 176; 214) vorgesehen ist, entgegen dessen Rückstellkraft die in oder an dem Adapterelement (31) beweglich gelagerten Eingriffsmittel (37) aus einer Eintauchlage, in welcher sie in die Längsnut (27) eintauchbar sind, in eine Eingriffslage, in welcher sie die Hinterschneidung (30) der Längsnut (27) hintergreifen, bringbar sind oder entgegen dessen Rückstellkraft die Eingriffsmittel . (37) aus der Eingriffslage in die Eintauchlage bringbar sind.

3. Vorrichtung (14) nach Anspruch 1 oder 2,
**dadurch gekennzeichnet, dass**
die Eingriffsmittel (37) durch eine Verstellung des Betätigungselements (34) relativ zu dem Adapterelement (31), insbesondere durch eine Verdrehung eines Gewindebolzens (40) relativ zu dem Adapterelement (31), aus der Eintauchlage in die Eingriffslage bringbar sind.

4. Vorrichtung (14) nach einem der vorherigen Ansprüche,
**dadurch gekennzeichnet, dass**
eine Kulissenführung (154) vorgesehen ist, entlang derer die Eingriffsmittel (37) während ihrer Bewegung aus der Eintauchlage in die Eingriffslage verschiebbar sind.

5. Vorrichtung (14) nach einem der vorherigen Ansprüche,
**dadurch gekennzeichnet, dass**
ein Zahnstangengetriebe (122, 124) und/oder Nockengetriebe (124, 134) zur Umsetzung einer Bewegung des Betätigungselements (34) in eine Bewegung der Eingriffsmittel (37) vorgesehen sind bzw. ist.

6. Vorrichtung (14) nach einem der vorherigen Ansprüche,
**dadurch gekennzeichnet, dass**
zwei beweglich in oder an dem Adapterelement (31) gelagerte Eingriffsmittel (37) nach Art eines Scherenmechanismus aus der Eintauchlage in die Eingriffslage bewegbar sind.

7. Vorrichtung (14) nach einem der vorherigen Ansprüche,
**dadurch gekennzeichnet, dass**
die Eingriffsmittel (37) relativ zu dem Adapterelement (31) um eine Drehachse verdrehbar sind, die sich im am Ladeboden (12) montierten Zustand der Vorrichtung (14) im Wesentlichen parallel zu der Längsnut (27) erstreckt.

8. Vorrichtung (14) nach einem der vorherigen Ansprüche,
**dadurch gekennzeichnet, dass**
eine Drehachse für die Eingriffsmittel (37) durch ein Federelement (214) definiert ist, welches mit den Eingriffsmitteln (37) zusammenwirkt, um die Eingriffsmittel (37) in eine Eintauchlage vorzuspannen.

9. Vorrichtung (14) nach einem der vorherigen Ansprüche,
**dadurch gekennzeichnet, dass**
ein Federelement (194) mit einem, sich insbesondere von einer Drehachse für die Eingriffsmittel (37) in Richtung Längsnut (27) erstreckenden, Hakenabschnitt (186), der mit der Hinterschneidung (30) der Längsnut (27) in Eingriff bringbar ist, und/oder mit einem, insbesondere dem Hakenabschnitt (186) abgewandten, Gegenabschnitt (188) der Eingriffsmittel (37) zusammenwirkt, um die Eingriffsmittel (37) in eine Eintauchlage vorzuspannen.

10. Vorrichtung (14) nach Anspruch 9,
**dadurch gekennzeichnet, dass**
die Eingriffsmittel (37) durch Zusammenwirken eines Gehäuses (33) für das Adapterelement (31) mit dem Gegenabschnitt (188) entgegen einer Rückstellkraft des Federelements (194) aus der Eintauchlage in eine Eingriffslage bringbar sind und vorzugsweise in dieser sicherbar sind.

11. Vorrichtung (14) nach einem der vorherigen Ansprüche,
**dadurch gekennzeichnet, dass**
ein Mechanismus zur Sicherung der Eingriffsmittel (37) in ihrer Eingriffslage vorgesehen ist.

12. Vorrichtung (14) nach einem der vorherigen Ansprüche,
**dadurch gekennzeichnet, dass**
die Eingriffsmittel (37) die Form eines C-Profils aufweisen, dessen eines Ende in die Längsnut (27) eintauchbar ist, um die Hinterschneidung (30) zu hintergreifen, und dessen anderes Ende in eine Nut (84; 200) des Adapterelements (31) eingreift, insbesondere wobei ein Mittel zur Sicherung der Eingriffsmittel (37) in der Adapternut (84; 200) vorgesehen ist.

13. Vorrichtung (14) nach einem der vorherigen Ansprüche,
**dadurch gekennzeichnet, dass**
das Adapterelement (31) durch eine Verstellung des Betätigungselements (34) relativ zu dem Adapterelement (31) von dem Ladeboden (12) weg bewegbar ist, um die in die Längsnut (27) eingetauchtes Eingriffsmittel (37) kraft- und formschlüssig mit der Hinterschneidung (30) in Eingriff zu bringen.

## Claims

1. An apparatus (14) for the securing of a load (10) at a load bed (12) which has at least one longitudinal groove (27) comprising at least one undercut (30); said apparatus (14) having a clamping mechanism (38) which comprises an adapter element (31) having two engagement means (37) which can be introduced into the longitudinal groove (27) and an actuation element (34) by which the engagement means (37) of the adapter element (31) can be brought into engagement with the undercut (30) of the longitudinal groove (27) in a shape-matched and force-transmitting manner, wherein the engagement means (37) are movably supported in or at the adapter element (31) and can be moved out of an insertion position, in which they can be inserted into the longitudinal groove (27), and into an engagement position, in which they engage behind the undercut (30) of the longitudinal groove (27), by a rotation, a pivoting and/or a displacement,
**characterized in that**
the engagement means (37) can be brought out of the insertion position and into the engagement position by a movement of a housing (33), at least partly surrounding the adapter element (31), relative to the adapter element (31),
with the housing (33) being configured such that it can be supported at a groove environment (28) of the longitudinal groove (27) and can clamp the load bed (12) between the engagement means (37) and the housing (33) and thus fixes the securing apparatus (14) to the load bed (12).

2. An apparatus (14) in accordance with claim 1,
**characterized in that**
a spring element (98; 164; 176; 214) is provided against whose restoring force the engagement means (37) movably supported in or at the adapter element (31) can be brought out of an insertion position, in which they can be inserted into the longitudinal groove (27), and into an engagement position, in which they engage behind the undercut (30) of the longitudinal groove (27), or the engagement means (37) can be brought out of the engagement position and into the insertion position against said restoring force of said spring element (98; 164; 176; 214).

3. An apparatus (14) in accordance with claim 1 or claim 2,
**characterized in that**
the engagement means (37) can be brought out of the insertion position and into the engagement position by an adjustment of the actuation element (34) relative to the adapter element (31), in particular by a rotation of a threaded bolt (40) relative to the adapter element (31).

4. An apparatus (14) in accordance with any one of the preceding claims,
**characterized in that**
a block guide (154) is provided along which the engagement means (37) can be moved during their movement out of the insertion position and into the engagement position.

5. An apparatus (14) in accordance with any one of the preceding claims,
**characterized in that**
a rack and pinion gear (122, 124) and/or a cam gear (124, 134) is/are provided to translate a movement of the actuation element (34) into a movement of the engagement means (37).

6. An apparatus (14) in accordance with any one of the preceding claims,
**characterized in that**
two engagement means (37) movably supported in or at the adapter element (31) are movable out of the insertion position and into the engagement position in the manner of a scissor mechanism.

7. An apparatus (14) in accordance with any one of the preceding claims,
**characterized in that**
the engagement means (37) are rotatable relative to the adapter element (31) about an axis of rotation which extends substantially in parallel with the longitudinal groove (27) in the state in which the apparatus (14) is installed at the load bed (12).

8. An apparatus (14) in accordance with any one of the preceding claims,
**characterized in that**
an axis of rotation for the engagement means (37) is defined by a spring element (214) which cooperates with the engagement means (37) to bias the engagement means (37) into an insertion position.

9. An apparatus (14) in accordance with any one of the preceding claims,
**characterized in that**
a spring element (194) cooperates with a hook section (186) which in particular extends from an axis of rotation for the engagement means (37) in the direction of the longitudinal groove (27) and which can be brought into engagement with the undercut (30) of the longitudinal groove (27) and/or said spring element (194) cooperates with an opposing section (188) of the engagement means (37) which is in particular remote from the hook section (186) in order to bias the engagement means (37) into an insertion position.

10. An apparatus (14) in accordance with claim 9,
**characterized in that**
the engagement means (37) can be brought out of the insertion position and into an engagement position and can preferably be secured therein by a cooperation of a housing (33) for the adapter element (31) with the opposing section (188) against a restoring force of the spring element (194).

11. An apparatus (14) in accordance with any one of the preceding claims,
**characterized in that**
a mechanism for securing the engagement means (37) in their engagement position is provided.

12. An apparatus (14) in accordance with anyone of the preceding claims,
**characterized in that**
the engagement means (37) have the shape of a C-section whose one end can be inserted into the longitudinal groove (27) to engage behind the undercut (30) and whose other end engages into a groove (84; 200) of the adapter element (31),
with a means for securing the engagement means (37) in the adapter groove (84; 200) in particular being provided.

13. An apparatus (14) in accordance with any one of the preceding claims,
**characterized in that**
the adapter element (31) is movable away from the load bed (12) by an adjustment of the actuation element (34) relative to the adapter element (31) in order to bring the engagement means (37) inserted into the longitudinal groove (27) into engagement with the undercut (30) in a shape-matched and force-transmitting manner.

## Revendications

1. Dispositif (14) de blocage de marchandises (10) sur un plancher de chargement (12) qui comprend au moins une rainure longitudinale (27) pourvue d'au moins une contre-dépouille (30), comportant un mécanisme de coincement (38) qui comprend un élément adaptateur (31) pourvu de deux moyens d'engagement (37) susceptibles d'être introduits dans la rainure longitudinale (27) et un élément d'actionnement (34) permettant d'amener les moyens d'engagement (37) de l'élément adaptateur (31) en engagement avec la contre-dépouille (30) de la rainure longitudinale (27) par coopération de force et de forme,
dans lequel
les moyens d'engagement (37) sont montés mobiles dans ou sur l'élément adaptateur (31) et peuvent être amenés depuis une position d'immersion dans laquelle ils peuvent être immergés dans la rainure longitudinale (27) par une rotation, un basculement et/ou une translation jusque dans une position d'engagement dans laquelle ils engagent par l'arrière la contre-dépouille (30) de la rainure longitudinale (27),
**caractérisé en ce que**
les moyens d'engagement (37) peuvent être amenés depuis la position d'immersion jusque dans la position d'engagement par un mouvement d'un boîtier (33), entourant au moins partiellement l'élément adaptateur (31), par rapport à l'élément adaptateur (31), et
le boîtier (33) est réalisé de manière à pouvoir s'appuyer contre les alentours (28) de la rainure longitudinale (27) et coincer le plancher de chargement (12) entre les moyens d'engagement (37) et le boîtier (33) et fixer ainsi le dispositif de blocage (14) au plancher de chargement (12).

2. Dispositif (14) selon la revendication 1,
**caractérisé en ce que**
il est prévu un élément ressort (98 ; 164 ; 176 ; 214) ayant une force de rappel à l'encontre de laquelle les moyens d'engagement (37) montés mobiles dans ou sur l'élément adaptateur (31) peuvent être amenés depuis une position d'immersion dans laquelle ils peuvent être immergés dans la rainure longitudinale (27) jusque dans une position d'engagement dans laquelle ils engagent par l'arrière la contre-dépouille (30) de la rainure longitudinale (27), ou ayant une force de rappel à l'encontre de laquelle les moyens d'engagement (37) peuvent être amenés depuis la position d'engagement jusque dans la position d'immersion.

3. Dispositif (14) selon la revendication 1 ou 2,
**caractérisé en ce que**
les moyens d'engagement (37) peuvent être amenés depuis la position d'immersion jusque dans la position d'engagement par un déplacement de l'élément d'actionnement (34) par rapport à l'élément adaptateur (31), en particulier par une rotation d'un boulon fileté (40) par rapport à l'élément adaptateur (31).

4. Dispositif (14) selon l'une des revendications précédentes,
**caractérisé en ce que**
il est prévu un guidage à coulisse (154) le long duquel les moyens d'engagement (37) sont mobiles en translation depuis la position d'immersion jusque dans la position d'engagement pendant leur mouvement.

5. Dispositif (14) selon l'une des revendications précédentes,
**caractérisé en ce que**
il est prévu un engrenage à crémaillère (122, 124) et/ou un engrenage à came (124, 134) pour convertir un mouvement de l'élément d'actionnement (34) en un mouvement des moyens d'engagement (37).

6. Dispositif (14) selon l'une des revendications précédentes,
**caractérisé en ce que**
deux moyens d'engagement (37) montés mobiles dans ou sur l'élément adaptateur (31) sont mobiles depuis la position d'immersion jusque dans la position d'engagement à la manière d'un mécanisme à ciseaux.

7. Dispositif (14) selon l'une des revendications précédentes,
**caractérisé en ce que**
les moyens d'engagement (37) sont mobiles en rotation autour d'un axe de rotation par rapport à l'élément adaptateur (31), ledit axe de rotation s'étendant sensiblement parallèlement à la rainure longitudinale (27) dans l'état monté sur le plancher de chargement (12) du dispositif (14).

8. Dispositif (14) selon l'une des revendications précédentes,
**caractérisé en ce que**
un axe de rotation pour les moyens d'engagement (37) est défini par un élément ressort (214) qui coopère avec les moyens d'engagement (37) pour précontraindre les moyens d'engagement (37) vers une position d'immersion.

9. Dispositif (14) selon l'une des revendications précédentes,
**caractérisé en ce que**
un élément ressort (194) coopère avec une portion formant crochet (186) qui s'étend en particulier depuis un axe de rotation pour les moyens d'engagement (37) en direction de la rainure longitudinale (27) et qui peut être amenée en engagement avec la contre-dépouille (30) de la rainure longitudinale (27), et/ou avec une portion antagoniste (188) des moyens d'engagement (37) en particulier détournée de la portion formant crochet (186), afin de précontraindre les moyens d'engagement (37) vers une position d'immersion.

10. Dispositif (14) selon la revendication 9,
**caractérisé en ce que**
les moyens d'engagement (37) peuvent être amenés depuis la position d'immersion jusque dans une position d'engagement à l'encontre d'une force de rappel de l'élément ressort (194) et de préférence être bloqués dans ladite position, par coopération d'un boîtier (33) pour l'élément adaptateur (31) avec la portion antagoniste (188).

11. Dispositif (14) selon l'une des revendications précédentes,
**caractérisé en ce que**
il est prévu un mécanisme pour bloquer les moyens d'engagement (37) dans leur position d'engagement.

12. Dispositif (14) selon l'une des revendications précédentes,
**caractérisé en ce que**
les moyens d'engagement (37) présentent la forme d'un profil en C dont une extrémité peut être immergée dans la rainure longitudinale (27) pour engager par l'arrière la contre-dépouille (30), et dont l'autre extrémité s'engage dans une rainure (84 ; 200) de l'élément adaptateur (31), et en particulier il est prévu un moyen pour bloquer les moyens d'engagement (37) dans la rainure d'adaptateur (84 ; 200).

13. Dispositif (14) selon l'une des revendications précédentes,
**caractérisé en ce que**
l'élément adaptateur (31) est mobile en éloignement du plancher de chargement (12) par un déplacement de l'élément d'actionnement (34) par rapport à l'élément adaptateur (31), afin d'amener en engagement les moyens d'engagement (37), immergés dans la rainure longitudinale (27), avec la contre-dépouille (30) par coopération de force et de forme.
